# EUROPEAN PATENT APPLICATION

(11) **EP 4 277 169 A1**
(43) Date of publication of application: **15.11.2023**
(21) Application number: 22748837.6
(22) Date of filing: 13.01.2022
(51) Int. Cl.: H04J 3/06

(54) **COMMUNICATION METHOD AND DEVICE**

(30) Priority: 03.02.2021 CN 202110151701
(71) Applicant: Huawei Technologies Co., Ltd., Shenzhen, Guangdong 518129 (CN)
(72) Inventor: XUE, Jianlin, Shenzhen, Guangdong 518129 (CN); LYU, Jingfei, Shenzhen, Guangdong 518129 (CN); WU, Xuming, Shenzhen, Guangdong 518129 (CN)
(74) Representative: Isarpatent
(86) International application number: PCT/CN2022/071827
(87) International publication number: WO 2022/166558

(57) **Abstract**

This application discloses a communication method and a device, and belongs to the communication field. The method includes: generating a passive optical network PON data frame, where the PON data frame includes an overhead area, the overhead area includes at least a part of a first timestamp, and the first timestamp is for time synchronization; and sending the PON data frame. This application can reduce operation overheads for parsing a PON data frame. This application is for time synchronization between an OLT and an ONU.

## Description

This application claims priority to Chinese Patent Application No. 202110151701.5, filed with the China National Intellectual Property Administration on February 3, 2021 and entitled "COMMUNICATION METHOD AND DEVICE", which is incorporated herein by reference in its entirety.

### TECHNICAL FIELD

This application relates to the communication field, and in particular, to a communication method and a device.

### BACKGROUND

A passive optical network (Passive Optical Network, PON), is an optical distribution network mainly formed by passive components. The PON includes an optical line terminal (optical line terminal, OLT) and an optical network unit (Optical Network Unit, ONU). The OLT and the ONU need to keep time synchronization, to implement effective data transmission.

Currently, the OLT generates a PON data frame, and includes time information in a payload (payload) area of the PON data frame, where the time information indicates a sending moment of a target PON data frame to be sent in the future. After receiving the PON data frame and subsequently receiving the target PON data frame, the ONU writes a sum of the moment indicated by the time information and a pre-obtained transmission time difference into a real-time clock (Real_Time Clock, RTC) of the ONU, to complete time synchronization.

However, because time information appears at different locations in different PON data frames, complexity of a process of obtaining time information by the ONU is high, and operation overheads for parsing a PON data frame are high.

### SUMMARY

Embodiments of this application provide a communication method and a device. The technical solutions are as follows.

According to a first aspect, this application provides a communication method. The method includes: generating a PON data frame, where the PON data frame includes an overhead area, the overhead area includes at least a part of a first timestamp, and the first timestamp is for time synchronization; and sending the PON data frame.

In an optional manner, the method may be performed by an OLT, and the PON data frame is a downlink frame. For example, the first timestamp is for time synchronization between an ONU and the OLT. In another optional manner, the method may be performed by the ONU, and the PON data frame is an uplink frame. For example, the first timestamp is for reverse time synchronization between the ONU and the OLT, or the first timestamp is for time monitoring performed by the OLT on the ONU.

In this application, at least a part of the first timestamp is carried in the overhead area of the PON data frame, so that time information is carried at a fixed location of the PON data frame, and complexity of obtaining the time information by the ONU is reduced, thereby reducing operation overheads for parsing the PON data frame.

The first timestamp indicates a sending moment of data corresponding to a specified location, and the specified location may be determined by using a preset rule. The preset rule may be agreed on by the OLT and the ONU, or may be carried in a specified PON data frame. For example, the preset rule may be carried in an overhead area or a payload area of the specified PON data frame.

In a first implementation, a PON data frame carries all content of the timestamp. The overhead area includes a target field, the target field carries time information, and the time information includes the first timestamp. In this way, the first timestamp is carried in the overhead area of the PON data frame, so that time information is carried at a fixed location of the PON data frame, and complexity of obtaining the time information by the ONU is reduced, thereby reducing operation overheads for parsing the PON data frame. For example, a length of the first timestamp is 96 bits or 80 bits.

It is assumed that the PON data frame that carries the first timestamp is a first PON data frame. The specified location is a location in the first PON data frame, or may be a location of another PON data frame other than the first PON data frame. In an optional manner, if the specified location is an x^{th} bit in the first PON data frame, the first timestamp indicates a sending moment of data of the x^{th} bit in the first PON data frame, where x is a positive integer, for example, 1. In another optional manner, if the specified location is an x^{th} bit in an m^{th} PON data frame before the first PON data frame or an x^{th} bit in an n^{th} PON data frame after the first PON data frame, the first timestamp indicates a sending moment of data of the x^{th} bit in the m^{th} PON data frame before the first PON data frame or a sending moment of data of the x^{th} bit in the n^{th} PON data frame after the first PON data frame, m, n, and x are positive integers.

Optionally, the time information further includes time domain information, and the time domain information indicates a time domain to which the first timestamp belongs. A time domain refers to a reference time source for time synchronization, namely, a time synchronization source, which is also referred to as a clock source. A time domain to which a timestamp belongs is a reference time source for the timestamp. The time domain to which the timestamp belongs is indicated in the time information, so that the ONU can effectively distinguish the time domain to which the timestamp belongs.

In an optional example, the time information further includes time type information, and the time type information indicates a meaning of data corresponding to the timestamp carried in the PON data frame, namely, a definition of the timestamp. In a communication system, there may be one or more meanings of data corresponding to a timestamp, and the meaning of the data corresponding to the timestamp may be pre-agreed on in the communication system. For example, when the time type information carries a first type identifier, the time type information indicates that a length of the timestamp is 80 bits, where first 48 bits indicate time whose minimum unit is second, and last 32 bits indicate time whose minimum unit is nanosecond. This is not limited in this embodiment of this application. During actual implementation, when there are a plurality of types of timestamps in the communication system, the time type information may carry different type identifiers to indicate meanings of data corresponding to different timestamps. The foregoing first type identifier is merely an example for description. Content and a quantity of first type identifiers are not limited in this embodiment of this application.

Optionally, the target field further includes a type identifier, and the type identifier indicates a type of information carried in the target field. Different type identifiers are carried in different PON data frames, so that different information is carried in target fields of different PON data frames. In this way, different information can be carried in a target field at a same location in different PON data frames, so that the target field is reused, functions of the target field are enriched, and a waste of communication resources caused by redundant information carried in the target field is reduced.

For example, if the type identifier is a first identifier, the target field carries the time information. If the type identifier is a second identifier, the target field carries non-time information. The non-time information is information other than the time information, for example, PON identifier information. If the type identifier is a third identifier, the target field indicates that the OLT in a PON is switched. If the type identifier is a fourth identifier, the target field carries reserved information. If the type identifier is a fifth identifier, the target field carries private definition information.

In a second implementation, all content of the first timestamp is carried in a plurality of PON data frames. For example, assuming that all the content of the first timestamp is carried in two PON data frames, the process of generating a PON data frame includes: generating two PON data frames, where an overhead area of each PON data frame includes a target field, and the target field carries time information; and the two PON data frames include a first PON data frame and a second PON data frame, time information of the first PON data frame includes a first part of the first timestamp, and time information of the second PON data frame includes a second part of the first timestamp. The first timestamp is split and carried in the two PON data frames. In this way, compared with the first implementation, a length of a target field in each PON data frame can be reduced, and transmission overheads for each PON data frame can be reduced to some extent. During actual implementation, all the content of the first timestamp may also be carried in at least three PON data frames, for example, three or four PON data frames, provided that it is ensured that the ONU can obtain the first timestamp from the at least three PON data frames. In this embodiment of this application, a quantity of PON data frames that carry different parts of a same first timestamp is not limited. When all the content of the first timestamp is carried in at least three PON data frames respectively, for a structure and a processing manner of a PON data frame that carries a part of a minimum time granularity of the first timestamp, refer to a structure and a processing manner of the foregoing PON data frame (for example, the first PON data frame) that carries a part of the minimum time granularity of the first timestamp; and for a structure and a processing manner of a PON data frame that carries a part of another time granularity of the first timestamp, refer to a structure and a processing manner of the foregoing PON data frame (for example, the second PON data frame) that carries a part of a non-minimum time granularity of the first timestamp.

In an optional example, the first PON data frame may be in a one-to-one correspondence with the second PON data frame. In this way, rates at which the OLT generates and sends the first PON data frame and the second PON data frame may be the same, for example, the two PON data frames are separately generated at a rate of 100 per second.

In another optional example, a time granularity indicated by the first part is less than a time granularity indicated by the second part; and the foregoing process of sending the PON data frame includes: sending, when the second part of the first timestamp changes relative to a second part of a historical first timestamp, a PON data frame that carries the second part of the first timestamp at least twice, where the historical first timestamp is a latest first timestamp (for example, a sending moment of data corresponding to a previous specified location) before the first timestamp. The OLT sends the second PON data frame a plurality of times, which can ensure that the second part can be effectively received by the ONU, thereby ensuring that an ONU side can trace a time change at the OLT in time. In particular, when a rate at which an OLT side generates the first PON data frame is greater than a rate at which the OLT side generates the second PON data frame, it is ensured that the ONU side can trace the time change at the OLT in time.

Assuming that the first PON data frame carries a first part with a small time granularity, the foregoing specified location is a location in the first PON data frame, or may be a location of another PON data frame other than the first PON data frame. In an optional manner, if the specified location is an x^{th} bit in the first PON data frame, the first timestamp indicates a sending moment of data of the x^{th} bit in the first PON data frame, where x is a positive integer, for example, 1. In another optional manner, if the specified location is an x^{th} bit in an m^{th} PON data frame before the first PON data frame or an x^{th} bit in an n^{th} PON data frame after the first PON data frame, the first timestamp indicates a sending moment of data of the x^{th} bit in the m^{th} PON data frame before the first PON data frame or a sending moment of data of the x^{th} bit in the n^{th} PON data frame after the first PON data frame, m, n, and x are positive integers. The foregoing specified location is described by using a location associated with the first PON data frame as an example. During actual implementation, the specified location may alternatively be another location, provided that it is ensured that the ONU can determine the specified location based on the first timestamp and the preset rule. This is not limited in this embodiment of this application.

Optionally, the first timestamp belongs to a first time domain, and the method further includes: generating a third PON data frame, where the third PON data frame includes an overhead area, the overhead area includes a target field, the target field carries time information, the time information includes time domain information, and the time domain information indicates an identifier of a second time domain and a time deviation between the second time domain and the first time domain; and sending the third PON data frame.

By using the third PON data frame, the ONU may determine the time deviation between the second time domain and the first time domain, to determine a corresponding second timestamp in the second time domain based on the first timestamp.

In at least one PON data frame of the first PON data frame, the second PON data frame, and the third PON data frame, content of time information may further include other content. In an optional implementation, the time information further includes a content indication identifier, and the content indication identifier indicates a category of the time information. In this way, content mainly carried in the time information is determined based on the content indication identifier.

In at least one PON data frame of the first PON data frame, the second PON data frame, and the third PON data frame, in an optional example, the overhead area includes an SFC field, the SFC field includes a type identifier, and the type identifier indicates a type of information carried in the target field. The type identifier is set in the SFC field, so that functions of an SFC can be enriched.

For example, if the type identifier is a first identifier, the target field carries the time information. If the type identifier is a second identifier, the target field carries non-time information. The non-time information is information other than the time information, for example, PON identifier information. If the type identifier is a third identifier, the target field indicates that the OLT in a PON is switched. If the type identifier is a fourth identifier, the target field carries reserved information. If the type identifier is a fifth identifier, the target field carries private definition information.

In another optional example, the target field is located in a PON identifier structure, the PON identifier structure carries a type identifier, and the type identifier indicates a type of information carried in the target field. In this way, functions of the PON identifier structure can be enriched, and utilization of the PON identifier structure can be improved. For example, if the type identifier is a first identifier, the target field carries the time information. If the type identifier is a second identifier, the target field carries non-time information, for example, at least a part of PON identifier information. If the type identifier is a third identifier, the target field indicates that the OLT in a PON is switched. If the type identifier is a fourth identifier, the target field carries reserved information. If the type identifier is a fifth identifier, the target field carries private definition information.

According to a second aspect, a communication method is provided. The method includes: receiving a passive optical network PON data frame, where the PON data frame includes an overhead area, the overhead area includes at least a part of a first timestamp, and the first timestamp is for time synchronization; and parsing the PON data frame to obtain the first timestamp.

In an optional manner, the method may be performed by an ONU, and the PON data frame is a downlink frame. For example, the first timestamp is for time synchronization between the ONU and an OLT. In another optional manner, the method may be performed by the OLT, and the PON data frame is an uplink frame. For example, the first timestamp is for reverse time synchronization between the ONU and the OLT, or the first timestamp is for time monitoring performed by the OLT on the ONU.

In conclusion, in this application, at least a part of the first timestamp is carried in the overhead area of the PON data frame, so that time information is carried at a fixed location of the PON data frame, and complexity of a process of obtaining the time information by the ONU is reduced.

For a definition of the first timestamp, refer to the first aspect.

In a first implementation, a PON data frame carries all content of the timestamp. The overhead area includes a target field, the target field carries time information, and the time information includes the first timestamp; and the process of parsing the PON data frame to obtain the first timestamp includes: reading the time information from the target field, to obtain the first timestamp. In this way, the first timestamp is carried in the overhead area of the PON data frame, so that time information is carried at a fixed location of the PON data frame, and complexity of a process of obtaining the time information by the ONU is reduced, thereby reducing operation overheads for parsing the PON data frame.

Optionally, the time information further includes time domain information, and the time domain information indicates a time domain to which the first timestamp belongs; and the process of parsing the PON data frame to obtain the first timestamp includes: parsing the PON data frame to obtain the time domain indicated by the time domain information and the first timestamp. The time domain to which the timestamp belongs is indicated in the time information, so that the ONU can effectively distinguish the time domain to which the timestamp belongs.

In an optional example, the time information further includes time type information, and the time type information indicates a meaning of data corresponding to the timestamp carried in the PON data frame.

Optionally, the target field further includes a type identifier, and the type identifier indicates a type of the information carried in the target field; and if the type identifier is a first identifier, the target field carries the time information; or if the type identifier is a second identifier, the target field carries non-time information, for example, PON identifier information.

After obtaining the first timestamp, the ONU may further perform time synchronization based on the first timestamp. For example, time correction is performed first, and then time refreshing is performed, to complete time synchronization.

A time correction process means that the ONU determines time T on an OLT side based on a sum of a first timestamp T1 and a transmission time difference T2 (also referred to as a transmission delay). In other words, T=T1+T2. The time T on the OLT side corresponds to a receiving moment T3 of data corresponding to a specified location on an ONU side. The time T on the OLT side is time corrected (also referred as traced) by the ONU. A time synchronization process refers to a time refreshing process on the ONU side.

In a first optional implementation, the ONU records the time T on the OLT side, and refreshes, when the receiving moment T3 of the data corresponding to the specified location on the ONU side reaches, time on the ONU side by using the time T on the OLT side.

In a second optional implementation, the ONU records the time T on the OLT side and the receiving moment T3 of the data corresponding to the specified location on the ONU side. After a refresh condition is reached, a difference T5 between a refresh moment T4 on the ONU side and the receiving moment T3 is determined, and time on the ONU side is refreshed by using a sum of the time T on the OLT side and the difference T5. The refresh moment T4 refers to local time of the ONU when time refreshing is performed. Considering that there may be a processing error inside the ONU side, during time refreshing, weighted processing may be further performed on the foregoing difference T5. In this case, the foregoing process of refreshing time on the ONU side by using a sum of the time T on the OLT side and the difference T5 may be replaced with: refreshing the time on the ONU side by using a sum of the time T on the OLT side and a weighted difference T5w, where the weighted difference T5w=T5×w, and w is a preset weight value.

In a third optional implementation, the ONU determines a time difference T6 between the ONU and the OLT based on the time T on the OLT side and the receiving moment T3 of the data corresponding to the specified location on the ONU side, where T6=T - T3. After a refresh condition is reached, time on the ONU side is refreshed by using a sum of a refresh moment T4 on the ONU side and the time difference T6. Considering that there may be a processing error inside the ONU side and there may be link noise between the OLT and the ONU, during time refreshing, weighted processing may be further performed on the foregoing time difference T6. In this case, the foregoing process of refreshing time on the ONU side by using a sum of a refresh moment T4 on the ONU side and the time difference T6 may be replaced with: refreshing the time on the ONU side by using a sum of the refresh moment T4 on the ONU side and a weighted time difference T6v, where the weighted time difference T6v=T6×v, and v is a preset weight value.

In a second implementation, all content of the first timestamp is carried in a plurality of PON data frames. For example, assuming that all the content of the first timestamp is carried in two PON data frames, the process of receiving a passive optical network PON data frame includes: receiving two PON data frames, where an overhead area of each PON data frame includes a target field, and the target field carries time information; and the two PON data frames include a first PON data frame and a second PON data frame, time information of the first PON data frame includes a first part of the first timestamp, and time information of the second PON data frame includes a second part of the first timestamp; and the process of parsing the PON data frame to obtain the first timestamp includes: determining the first timestamp based on the first part and the second part. The first timestamp is split and carried in the two PON data frames. In this way, compared with the first implementation, a length of a target field in each PON data frame can be reduced, and transmission overheads for each PON data frame can be reduced to some extent.

After obtaining the first timestamp, the ONU may further perform time synchronization based on the first timestamp. For example, time correction is performed first, and then time refreshing is performed, to complete time synchronization. For the process, refer to the time synchronization process in the first implementation. A receiving moment T3 of data corresponding to a specified location may be implemented in a plurality of manners. It is assumed that the first PON data frame carries the first part with a small time granularity. In this case, in an optional manner, the specified location is an x^{th} bit in the first PON data frame. Correspondingly, a receiving moment at the specified location is a receiving moment of data of the x^{th} bit in the first PON data frame. In another optional manner, the specified location is an x^{th} bit in an m^{th} PON data frame before the first PON data frame. Correspondingly, a receiving moment at the specified location is a receiving moment of data of the x^{th} bit in the m^{th} PON data frame before the first PON data frame. In still another optional manner, the specified location is an x^{th} bit in an n^{th} PON data frame after the first PON data frame. Correspondingly, a receiving moment at the specified location is a receiving moment of data of the x^{th} bit in the n^{th} PON data frame after the first PON data frame.

Optionally, the first timestamp belongs to a first time domain, and the method may further include: receiving a third PON data frame, where the third PON data frame includes an overhead area, the overhead area includes a target field, the target field carries time information, the time information includes time domain information, and the time domain information indicates an identifier of a second time domain and a time deviation between the second time domain and the first time domain; parsing the third PON data frame to obtain the time deviation; and determining a second timestamp based on the first timestamp and the time deviation. The second timestamp is a timestamp in the second time domain.

In an optional implementation, the time information further includes a content indication identifier, and the content indication identifier indicates a category of the time information.

In an optional example, the overhead area includes an SFC field, the SFC field includes a type identifier, and the type identifier indicates a type of information carried in the target field; and if the type identifier is a first identifier, the target field carries the time information; or if the type identifier is a second identifier, the target field carries non-time information, for example, PON identifier information.

In another optional example, the target field is located in a PON identifier structure, the PON identifier structure carries a type identifier, and the type identifier indicates a type of information carried in the target field; and if the type identifier is a first identifier, the target field carries the time information; or if the type identifier is a second identifier, the target field carries non-time information, for example, at least a part of PON identifier information.

After obtaining the second timestamp in the second time domain, the ONU may further perform time synchronization based on the second timestamp. For example, after obtaining the second timestamp, the ONU may further perform time synchronization based on the second timestamp. For example, time correction is performed first, and then time refreshing is performed, to complete time synchronization.

A time correction process means that the ONU determines time T on an OLT side (where the time on the OLT side refers to time on the OLT side in the second time domain) based on a sum of a second timestamp T1 and a transmission time difference T2 (also referred to as a transmission delay). In other words, T=T1+T2. The time T on the OLT side corresponds to a receiving moment T3 of data corresponding to a specified location on an ONU side. The time T on the OLT side is time corrected by the ONU. A time synchronization process refers to a time refreshing process on the ONU side.

In a first optional implementation, the ONU records the time T on the OLT side, and refreshes, when the receiving moment T3 of the data corresponding to the specified location on the ONU side reaches, time on the ONU side by using the time T on the OLT side.

In a second optional implementation, the ONU records the time T on the OLT side and the receiving moment T3 of the data corresponding to the specified location on the ONU side. After a refresh condition is reached, a difference T5 between a refresh moment T4 on the ONU side and the receiving moment T3 is determined, and time on the ONU side is refreshed by using a sum of the time T on the OLT side and the difference T5. The refresh moment T4 refers to local time of the ONU when time refreshing is performed. Considering that there may be a processing error inside the ONU side, during time refreshing, weighted processing may be further performed on the foregoing difference T5. In this case, the foregoing process of refreshing time on the ONU side by using a sum of the time T on the OLT side and the difference T5 may be replaced with: refreshing the time on the ONU side by using a sum of the time T on the OLT side and a weighted difference T5w, where the weighted difference T5w=T5×w, and w is a preset weight value.

In a third optional implementation, the ONU determines a time difference T6 between the ONU and the OLT based on the time T on the OLT side and the receiving moment T3 of the data corresponding to the specified location on the ONU side, where T6=T - T3. After a refresh condition is reached, time on the ONU side is refreshed by using a sum of a refresh moment T4 on the ONU side and the time difference T6. Considering that there may be a processing error inside the ONU side and there may be link noise between the OLT and the ONU, during time refreshing, weighted processing may be further performed on the foregoing time difference T6. In this case, the foregoing process of refreshing time on the ONU side by using a sum of a refresh moment T4 on the ONU side and the time difference T6 may be replaced with: refreshing the time on the ONU side by using a sum of the refresh moment T4 on the ONU side and a weighted time difference T6v, where the weighted time difference T6v=T6×v, and v is a preset weight value.

It should be noted that, for a definition and an effect of related information in the second aspect, refer to the first aspect.

According to a third aspect, this application provides a communication apparatus. The communication apparatus may include at least one module. The at least one module may be configured to implement the communication method according to the first aspect or the possible implementations of the first aspect.

According to a fourth aspect, this application provides a communication apparatus. The communication apparatus may include at least one module. The at least one module may be configured to implement the communication method according to the second aspect or the possible implementations of the second aspect.

According to a fifth aspect, this application provides a computer device. The computer device includes a processor and a communication interface, the communication interface is configured to communicate with another device, and the processor is configured to perform the method according to the first aspect or the possible implementations of the first aspect.

According to a sixth aspect, this application provides a computer device. The computer device includes a processor and a communication interface, the communication interface is configured to communicate with another device, and the processor is configured to perform the method according to the second aspect or the possible implementations of the second aspect.

Optionally, the processors in the fifth aspect and the sixth aspect may be a central processing unit (central processing unit, CPU) or a processing circuit. The processing circuit may be a processing chip or a field programmable gate array (Field Programmable Gate Array, FPGA). The processing chip may be an integrated circuit (Application Specific Integrated Circuit, ASIC) chip. The communication interface is used by the processor to communicate with another device. The communication interface includes an input interface and an output interface.

In an optional implementation, the processing circuit includes a cache structure, for example, an internal storage structure of the FPGA or the ASIC chip, configured to cache data. In another optional implementation, the computer device may further include a memory, configured to cache data. For example, the memory is a flash memory (flash memory).

According to a seventh aspect, this application provides a computer device. The computer device includes a processor and a memory, the memory stores computer instructions, and the processor executes the computer instructions stored in the memory, so that the computer device performs the method according to the first aspect or the possible implementations of the first aspect, and the computer device deploys the communication apparatus according to the third aspect or the possible implementations of the third aspect.

According to an eighth aspect, this application provides a computer device. The computer device includes a processor and a memory, the memory stores computer instructions, and the processor executes the computer instructions stored in the memory, so that the computer device performs the method according to the second aspect or the possible implementations of the second aspect, and the computer device deploys the communication apparatus according to the fourth aspect or the possible implementations of the fourth aspect.

According to a ninth aspect, this application provides a computer-readable storage medium. The computer-readable storage medium stores computer instructions, and the computer instructions indicate a computer device to perform the method according to the first aspect or the possible implementations of the first aspect, or the computer instructions indicate the computer device to deploy the communication apparatus according to the third aspect or the possible implementations of the third aspect.

According to a tenth aspect, this application provides a computer-readable storage medium. The computer-readable storage medium stores computer instructions, and the computer instructions indicate a computer device to perform the method according to the second aspect or the possible implementations of the second aspect, or the computer instructions indicate the computer device to deploy the communication apparatus according to the fourth aspect or the possible implementations of the fourth aspect.

According to an eleventh aspect, this application provides a computer program product. The computer program product includes computer instructions, and the computer instructions are stored in a computer-readable storage medium. A processor of a computer device may read the computer instructions from the computer-readable storage medium. The processor executes the computer instructions, so that the computer device performs the method according to the first aspect or the possible implementations of the first aspect, and the computer device deploys the communication apparatus according to the third aspect or the possible implementations of the third aspect.

According to a twelfth aspect, this application provides a computer program product. The computer program product includes computer instructions, and the computer instructions are stored in a computer-readable storage medium. A processor of a computer device may read the computer instructions from the computer-readable storage medium. The processor executes the computer instructions, so that the computer device performs the method according to the second aspect or the possible implementations of the second aspect, and the computer device deploys the communication apparatus according to the fourth aspect or the possible implementations of the fourth aspect.

According to a thirteenth aspect, this application provides a chip. The chip may include a programmable logic circuit and/or program instructions. When the chip runs, the chip is configured to implement the communication method according to any one of the first aspect. Alternatively, when the chip runs, the chip is configured to implement the communication method according to any one of the second aspect.

According to a fourteenth aspect, this application provides a communication system, including an OLT and an ONU. The OLT includes the communication apparatus according to the third aspect, and the ONU includes the communication apparatus according to the fourth aspect.

In this application, the first timestamp is carried in the overhead area of the PON data frame, so that time information is carried at a fixed location of the PON data frame, and complexity of a process of obtaining the time information by the ONU is reduced, thereby reducing operation overheads for parsing the PON data frame.

The time information is located at a fixed location of the overhead area. Therefore, the ONU may parse the time information by performing a simple software processing procedure by using a CPU or directly by using hardware processing. Therefore, utilization of the CPU is effectively reduced.

In addition, the time information is carried in the overhead area of the PON data frame, and that a payload area carries other information is not affected. Therefore, time information may be carried in payload areas of a plurality of PON data frames on a premise that effective transmission of other information is ensured, thereby effectively meeting a time synchronization requirement.

### BRIEF DESCRIPTION OF DRAWINGS

FIG. 1 is a schematic diagram of an application scenario related to a communication method according to an embodiment of this application;
FIG. 2 is a schematic flowchart of a communication method according to an embodiment of this application;
FIG. 3 is a schematic diagram of a structure of a first PON data frame according to an embodiment of this application;
FIG. 4 is a schematic diagram of a structure of a second PON data frame according to an embodiment of this application;
FIG. 5 is a schematic diagram of a structure of a third PON data frame according to an embodiment of this application;
FIG. 6 is a schematic diagram of a structure of a fourth PON data frame according to an embodiment of this application;
FIG. 7 is a schematic diagram of a structure of a fifth PON data frame according to an embodiment of this application;
FIG. 8 is a schematic diagram of a structure of a sixth PON data frame according to an embodiment of this application;
FIG. 9 is a schematic diagram of a structure of a PON data frame that does not carry time information according to an embodiment of this application;
FIG. 10 is a schematic diagram of a structure of a seventh PON data frame according to an embodiment of this application;
FIG. 11 is a schematic flowchart of another communication method according to an embodiment of this application;
FIG. 12 is a schematic diagram of a structure of a first PON data frame according to an embodiment of this application;
FIG. 13 is a schematic diagram of a structure of a second PON data frame according to an embodiment of this application;
FIG. 14 is a schematic diagram of a structure of a third PON data frame according to an embodiment of this application;
FIG. 15 is a schematic diagram of a structure of an eighth PON data frame according to an embodiment of this application;
FIG. 16 is a schematic diagram of a structure of a PON data frame in which a type identifier is set in an SFC field;
FIG. 17 is a schematic diagram of a structure of another PON data frame in which a type identifier is set in an SFC field;
FIG. 18 is a schematic diagram of a structure of a ninth PON data frame according to an embodiment of this application;
FIG. 19 is a schematic diagram of a structure of a communication apparatus according to an embodiment of this application;
FIG. 20 is a schematic diagram of a structure of a communication apparatus according to an embodiment of this application;
FIG. 21 shows a possible basic hardware architecture of a computer device according to an embodiment of this application; and
FIG. 22 shows another possible basic hardware architecture of a computer device according to an embodiment of this application.

### DESCRIPTION OF EMBODIMENTS

To make principles and technical solutions of this application clearer, the following further describes implementations of this application in detail with reference to the accompanying drawings.

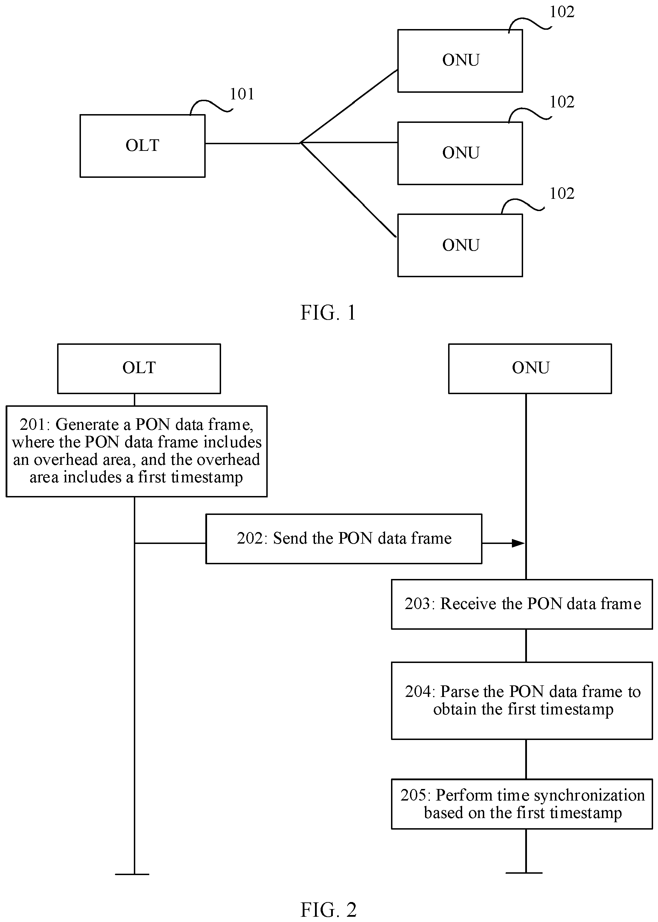

FIG. 1 is a schematic diagram of an application scenario related to a communication method according to an embodiment of this application. As shown in FIG. 1, in the application scenario, a communication system may be applied to various types of PONs. For example, the communication system may be applied to an Ethernet passive optical network (Ethernet Passive Optical Network, EPON), for example, an 10G EPON, a single-wavelength 25G EPON, a 2x25G EPON, a single-wavelength 50G EPON, a 2x50G EPON, or a 100G EPON. For another example, the communication system may be applied to a gigabit passive optical network (Gigabit Passive Optical Network, GPON), for example, a GPON, an XGPON, an XGSPON, or a TWDMPON.

The communication system includes an OLT 101 and a plurality of ONUs 102. The OLT 101 and the ONUs 102 communicate with each other through an optical distribution network (Optical Distribution Network, ODN).

The OLT 101 is usually located at a central office (Central Office, CO), and may manage at least one ONU 102. For example, the OLT 101 may include a transportation management (Transportation Management, TM) module, a media access control (Media Access Control, MAC) module, a central processing unit (Central Processing Unit, CPU), and the like. The TM module, the MAC module, the CPU, and the like may be integrated on a board, or may be integrated in a chip, for example, a system on chip (System on Chip, SOC) chip.

The ONU 102 may be deployed on a user side (for example, a customer premise) in a distributed manner. The ONU 102 may be a medium between the OLT 101 and a user device. For example, the ONU 102 may forward data received from the OLT 101 to the user device, and/or forward data received from the user device to the OLT 101. If the ONU 102 has a function of directly providing a user port, the ONU 102 is also referred to as an optical network terminal (Optical Network Terminal, ONT). In a first optional example, the ONU 102 includes a single family unit (Single Family Unit, SFU). A user device connected to the SFU includes: a personal computer (Personal Computer, PC), an Internet protocol television (Internet Protocol Television, IPTV), and/or a fixed-line phone. In a second optional example, the ONU 102 includes a multi-dwelling unit (Multi-Dwelling Unit, MDU). The MDU communicates with a user device through a very-high-bit-rate digital subscriber loop (Very-high-bit-rate Digital Subscriber loop, VDSL) technology. The user device connected to the MDU includes: a PC, an IPTV, and/or a fixed-line phone. In a third optional example, the ONU 102 includes a single business unit (Single Business Unit, SBU). A user device connected to the SBU includes: a PC and/or a fixed-line phone. In a fourth optional example, the ONU 102 includes a cell base unit (Cell Base Unit, CBU). A user device connected to the CBU includes a base station (base station). The base station transmits Internet information and/or voice information through the CBU. It should be noted that the foregoing ONU 102 may further include another type of unit or module. This is not limited in this embodiment of this application.

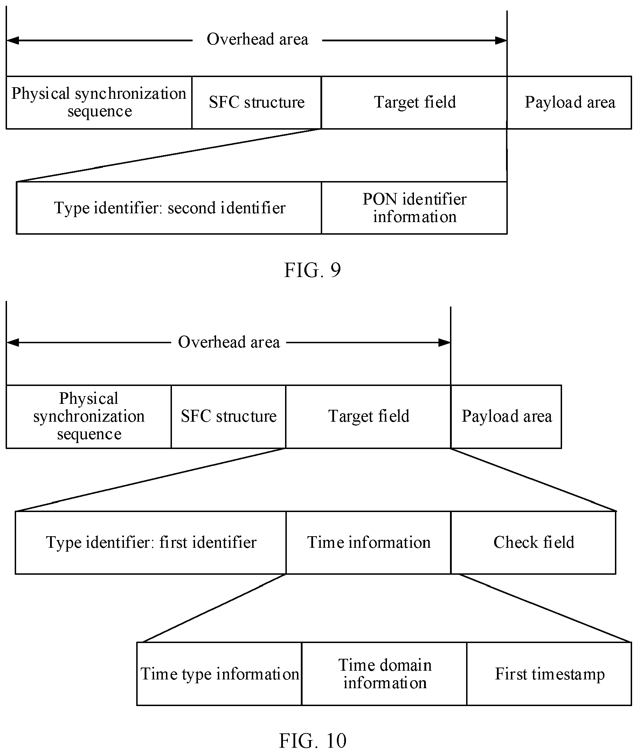

An embodiment of this application provides a communication method, which is mainly for time synchronization between the OLT and the ONU in the communication system in FIG. 1, and may also be for network connection maintenance in the communication system. In the communication method, a PON data frame sent by the OLT to the ONU includes an overhead area (also referred to as a frame header). The overhead area includes at least a part of a first timestamp, and the first timestamp is for time synchronization. In this way, the time synchronization between the OLT and the ONU may be implemented by carrying some or all of content of the timestamp in the overhead area of the PON data frame. Because lengths of fields (field, also referred to as bits) for carrying timestamps in the overhead area are different, structures of PON data frames are also different. In this embodiment of this application, two implementations in FIG. 2 and FIG. 10 are used as examples for description.

In a first implementation, a PON data frame carries all content of the timestamp. FIG. 2 is a schematic flowchart of a communication method according to an embodiment of this application. The communication method may be applied to the application scenario shown in FIG. 1. As shown in FIG. 2, the method includes the following steps.

S201: An OLT generates a PON data frame, where the PON data frame includes an overhead area, and the overhead area includes a first timestamp.

The first timestamp indicates a sending moment of data corresponding to a specified location, and the specified location may be determined by using a preset rule. The preset rule may be agreed on by the OLT and an ONU, or may be carried in a specified PON data frame.

For ease of description, in this embodiment, the PON data frame that carries the first timestamp is subsequently referred to as a first PON data frame. The specified location is a location in the first PON data frame, or may be a location of another PON data frame other than the first PON data frame. In an optional manner, if the specified location is an x^{th} bit in the first PON data frame, the first timestamp indicates a sending moment of data of the x^{th} bit in the first PON data frame, where x is a positive integer, for example, 1. In another optional manner, if the specified location is an x^{th} bit in an m^{th} PON data frame before the first PON data frame or an x^{th} bit in an n^{th} PON data frame after the first PON data frame, the first timestamp indicates a sending moment of data of the x^{th} bit in the m^{th} PON data frame before the first PON data frame or a sending moment of data of the x^{th} bit in the n^{th} PON data frame after the first PON data frame, m, n, and x are positive integers. It should be noted that, a first bit of a PON data frame refers to a start location of the PON data frame, and is a first bit of a physical synchronization sequence (Physical synchronization sequence, Psync) of the PON data frame. The foregoing specified location is described by using a location associated with the first PON data frame as an example. During actual implementation, the specified location may alternatively be another location, provided that it is ensured that the ONU can determine the specified location based on the first timestamp and the preset rule. This is not limited in this embodiment of this application.

In an optional implementation, the PON data frame supports carrying of a high-precision timestamp, and a length of the first timestamp is 96 bits. For a structure of the first timestamp, refer to a timestamp structure whose length is 96 bits in a 1588 protocol (for example, refer to a Timestamp structure and last 16 bits of the correctionField field in an IEEE 1588v2 protocol). In another optional implementation, the PON data frame supports carrying of an ordinary-precision timestamp, and a length of the first timestamp is 80 bits. For a structure of the first timestamp, refer to a timestamp structure whose length is 80 bits in a 1588 protocol (for example, refer to a Timestamp structure in an IEEE 1588v2 protocol). The foregoing 1588 protocol is also referred to as a precise time protocol (precise time protocol, PTP). In this embodiment of this application, the 1588 protocol may be a 1588 version 1 (version 1), a 1588 version 2 (version 2), or another version. Optionally, for the structure of the first timestamp, refer to a structure of a timestamp in another time synchronization protocol, for example, a network time protocol (Network Time Protocol, NTP), a real-time transport protocol (Real-time Transport Protocol, RTP), or another time synchronization protocol. This is not limited in this embodiment of this application.

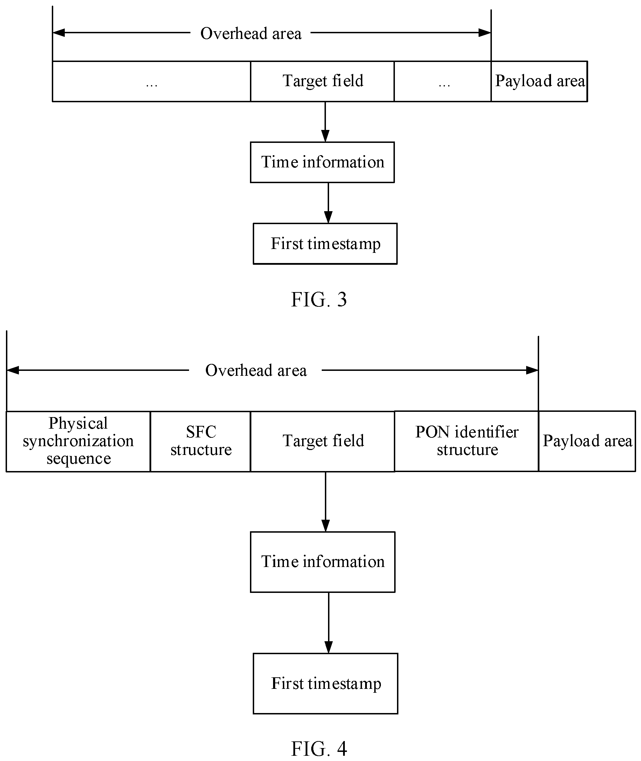

FIG. 3 is a schematic diagram of a structure of a first PON data frame according to an embodiment of this application. The PON data frame includes an overhead area and a payload area. The overhead area bears information for describing the payload area. For example, the overhead area carries a downstream physical synchronization block (Downstream physical synchronization block, PSBD). The payload area is for bearing service data. For example, the payload area carries physical (Physical, PHY) frame (frame) data. In this embodiment of this application, the overhead area includes a target field, the target field carries time information, and the time information includes the first timestamp. The target field is located at a fixed location in the overhead area. For example, the overhead area further includes a Psync, a superframe counter (superframe counter, SFC) structure (structure), and/or a PON identifier (identifier, ID) structure (also referred to as a PON identifier field). The target field is a field independently set in the overhead area. The target field may be located between the SFC structure and the PON identifier structure, or the target field may be located after the PON identifier structure. The Psync is for aligning a boundary of the PON data frame. A start location of the PON data frame may be determined by using the Psync. A length of the Psync may be 64 bits. The SFC structure includes an SFC field and a header error control (Header error control, HEC) field. For example, a length of the SFC field is 51 bits, and a length of the HEC field is 13 bits. An SFC value is recorded in the SFC field, and the SFC value identifies a sequence number of the PON data frame, namely, which PON data frame. The HEC field in the SFC structure is for checking the SFC field. For example, the HEC field carries a check code generated based on the SFC value. The PON identifier structure carries PON identifier information and a HEC field. The PON identifier information includes a PON identifier (PON-ID). For example, a length of the PON identifier is 32 bits, and a length of the HEC field is 13 bits. The PON identifier may be set by the OLT. The HEC field in the PON identifier structure is for checking the PON identifier information. For example, the HEC field carries a check code generated based on the PON identifier information. Optionally, the PON identifier information further includes PON identifier type (PON-ID type, PIT) information and transmit optical level (transmit optical level, TOL) information. The PON identifier type information indicates a type of the PON identifier, and the PON identifier type information includes: a reach extender (reach extender, RE) flag (flag), an ODN class (class), and reserved information. The reach extender refers to a relay existing in an optical path. The RE flag indicates whether the TOL information includes transmit power of the OLT or transmit power of the reach extender. The ODN class identifies a nominal optical parameter of a transceiver. For a definition of the ODN class, refer to International telecommunication union telecommunication standardization sector (ITU Telecommunication Standardization Sector, ITU-T) G.9872. The TOL information is for carrying optical power related information between the OLT and the ONU. For example, a length of a PON identifier type field is 8 bits, a length of the RE flag is 1 bit, a length of the ODN class is 3 bits, a length of the reserved information is 4 bits, and a length of the TOL information is 11 bits.

FIG. 4 is a schematic diagram of a structure of a second PON data frame according to an embodiment of this application. In FIG. 4, it is assumed that a target field is located between an SFC structure and a PON identifier structure. However, a specific location of the target field of the overhead area is not limited in this embodiment of this application.

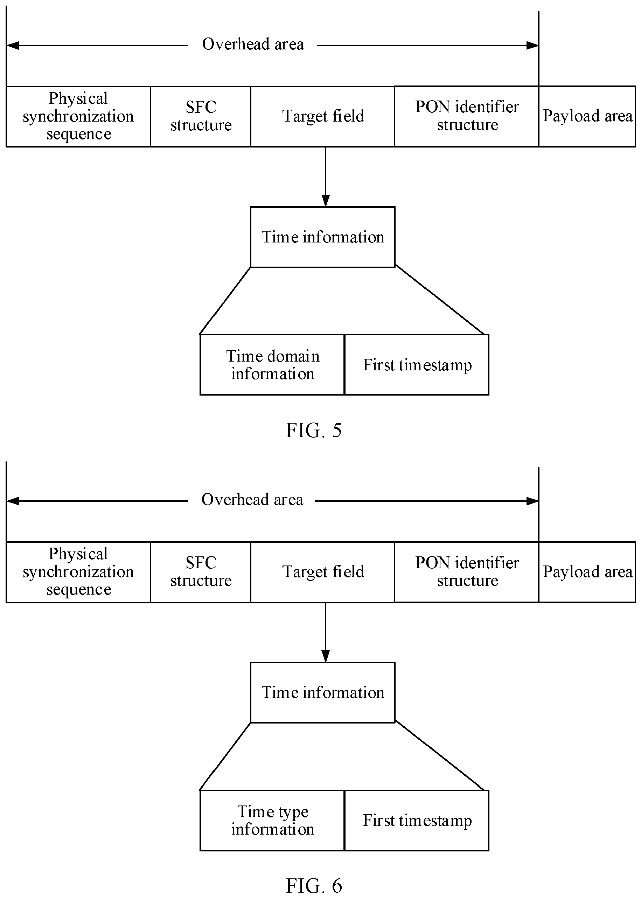

FIG. 5 is a schematic diagram of a structure of a third PON data frame according to an embodiment of this application. As shown in FIG. 5, time information may further include time domain information. The time domain information indicates a time domain to which a first timestamp belongs. A time domain refers to a reference time source for time synchronization, which is also referred to as a time synchronization source, a clock source, or a time reference. A time domain to which a timestamp belongs is a reference time source for the timestamp. For example, the communication system in this embodiment of this application supports a plurality of time domains. For example, if the communication system provides services for a plurality of operators, and each operator corresponds to a time domain, local time on the OLT side has a plurality of time references. The time domain to which the timestamp belongs is indicated in the time information, so that the ONU can effectively distinguish the time domain to which the timestamp belongs.

It should be noted that, if the communication system supports only one time domain, the OLT and the ONU in the communication system correspond to a same time domain, and the time information of the PON data frame may not include the time domain information. In this way, communication overheads and parsing complexity of the PON data frame can be reduced.

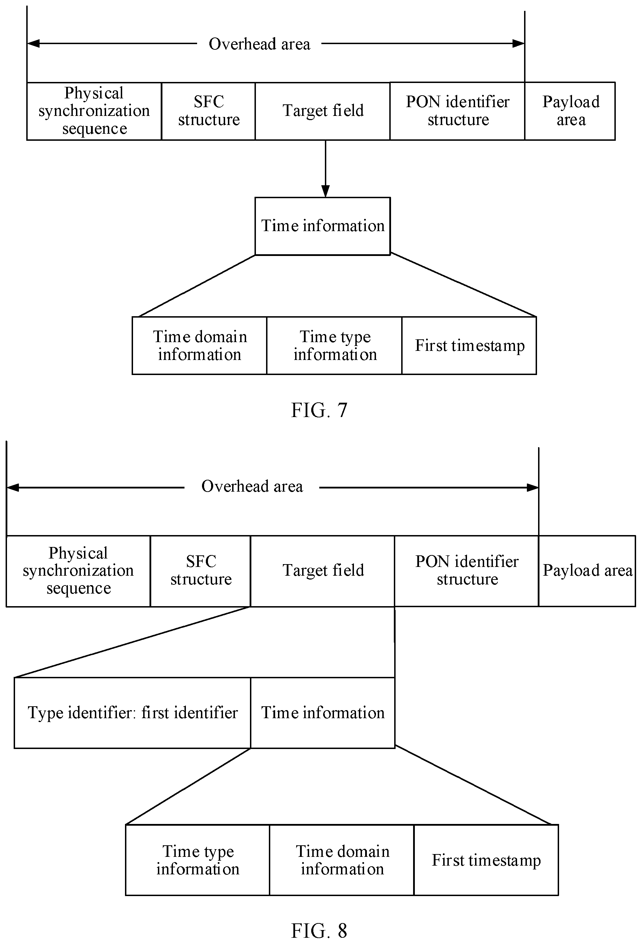

FIG. 6 and FIG. 7 are respectively schematic diagrams of structures of a fourth PON data frame and a fifth PON data frame according to an embodiment of this application. As shown in FIG. 6 and FIG. 7, the time information further includes time type information, and the time type information indicates a meaning of data corresponding to the timestamp carried in the PON data frame, namely, a definition of the timestamp. In the communication system, there may be one or more meanings of data corresponding to a timestamp, and the meaning of the data corresponding to the timestamp may be pre-agreed on in the communication system. For example, when the time type information carries a first type identifier, the time type information indicates that a length of the timestamp is 80 bits, where first 48 bits indicate time whose minimum unit is second, and last 32 bits indicate time whose minimum unit is nanosecond. This is not limited in this embodiment of this application.

It should be noted that, a sequence of information in the time information may be arranged according to a predefined sequence. A sequence of information in the time information in FIG. 5 to FIG. 7 is merely an example for description. This is not limited in this embodiment of this application.

In a communication system, a transmission frequency of a PON data frame is 8000 times per second, and a current time synchronization requirement is 100 times per second. In other words, when 100 PON data frames are for time synchronization per second, the time synchronization requirement can be met. In this case, if each PON data frame carries the time information by using a target field, a transmission frequency of the PON data frame for time synchronization reaches 8000 times per second, which fully meets the time synchronization requirement.

Optionally, because an actual time synchronization requirement is far less than 8000 times per second, some PON data frames generated by the OLT may also not carry time information, to reduce carrying of redundant time information (to be specific, although time information is carried, time synchronization is not performed based on the time information. In this case, the time information is redundant time information). In an optional example, the OLT generates another PON data frame, and the PON data frame does not include a target field. A structure of the PON data frame may be the same as that of a conventional PON data frame. In this way, compatibility with a conventional communication system can be implemented. In another optional example, an overhead area of each PON data frame generated by the OLT includes a target field, and the target field further includes a type identifier. The type identifier indicates a type of information carried in the target field. Different type identifiers are carried in different PON data frames, so that different information is carried in target fields of different PON data frames. In this way, different information can be carried in a target field at a same location in different PON data frames, so that the target field is reused, functions of the target field are enriched, and a waste of communication resources caused by redundant information carried in the target field is reduced.

Table 1 is an example of content of a type identifier and a type of information carried in a target field indicated by the type identifier according to an embodiment of this application. As shown in Table 1, if the type identifier is a first identifier, the target field carries time information. For content of the time information, refer to content of any time information in FIG. 3 to FIG. 7. FIG. 8 is a schematic diagram of a structure of a sixth PON data frame according to an embodiment of this application. In FIG. 8, a type identifier is a first identifier, and a corresponding target field carries time information. In an optional example, in FIG. 8, an overhead area of the PON data frame may include a PON identifier structure. For example, the PON identifier structure is located after the target field. In another optional example, in FIG. 8, an overhead area of the PON data frame may not include a PON identifier structure.

If the type identifier is a second identifier, the target field carries PON identifier information. For content of the PON identifier information, refer to content of the PON identifier information in the foregoing PON identifier structure. It should be noted that, if a target field in a PON data frame carries PON identifier information, an overhead area of the PON data frame may not include a PON identifier structure, in other words, the target field has implemented a function of the PON identifier structure. In this way, carrying of redundant information can be reduced. FIG. 9 is a schematic diagram of a structure of a PON data frame that does not carry time information according to an embodiment of this application. In FIG. 9, a type identifier is a second identifier, and a corresponding target field carries PON identifier information.

If the type identifier is a third identifier, the target field indicates that the OLT in a PON is switched. The communication system to which the OLT and the ONU belong generally includes an active OLT and a standby OLT. When one of the active OLT and the standby OLT is faulty, the current working OLT may be switched to the other OLT. The process is referred to as active/standby OLT switching. If the type identifier is the third identifier, the target field indicates that active/standby OLT switching is performed.

If the type identifier is a fourth identifier, the target field carries reserved information.

If the type identifier is a fifth identifier, the target field carries private definition information.

Specific content of the first identifier to the fifth identifier may be predetermined. In Table 1, a group of example identifier content is used as an example for description, but the identifier content is not limited.

**Table 1**

| Type identifier | Identifier content | Type of carried information |
|---|---|---|
| First identifier | 0b001 | Time information |
| Second identifier | 0b000 | PON identifier information |
| Third identifier | 0b010 | The OLT in the PON is switched |
| Fourth identifier | 0b011 to 0b100 | Reserved information |
| Fifth identifier | 0b111 | Private definition information |

FIG. 10 is a schematic diagram of a structure of a seventh PON data frame according to an embodiment of this application. In FIG. 10, a target field further includes a check field. The check field is for checking information other than the check field carried in the target field. For example, the check field carries a check code generated based on the other information. The check field may be located after the other information. Optionally, a length of the check field is 13 bits. For example, when the target field carries time information, the check field is for checking the time information. Optionally, the check field may be a HEC field. For a manner of generating content of the HEC field, refer to a manner of generating content of the HEC field in the foregoing SFC structure or PON identifier structure. This is not limited in this embodiment of this application.

FIG. 10 is described by using an example in which content of other information in the target field is the same as content of the target field of the PON data frame shown in FIG. 8. During actual implementation, the content of the other information in the target field may be alternatively the same as content of the target field of any PON data frame shown in FIG. 3 to FIG. 7. Details are not described again in this embodiment of this application.

S202: The OLT sends the PON data frame.

Refer to the communication system shown in FIG. 1. The OLT may send the PON data frame to the ONU through the ODN.

S203: The ONU receives the PON data frame.

Refer to the communication system shown in FIG. 1. The ONU receives the PON data frame through the ODN.

S204: The ONU parses the PON data frame to obtain the first timestamp.

Refer to S201. The PON data frame includes the overhead area, and the overhead area includes the first timestamp. Correspondingly, the ONU parses the overhead area of the PON data frame to obtain the first timestamp.

Further, as shown in FIG. 3 or FIG. 4, the overhead area includes a target field. The target field carries time information, and the time information includes the first timestamp. In this case, the ONU reads the time information from the target field, to obtain the first timestamp.

As shown in FIG. 5, the time information may further include time domain information, and the time domain information indicates a time domain to which the first timestamp belongs. In this case, the ONU may perform different actions according to different actual application scenarios. In this embodiment of this application, the following two optional manners are used as examples for description.

In a first optional manner, the ONU supports one or more time domains. A quantity of time domains supported by the ONU is less than or equal to a quantity of time domains supported by the OLT. The time domain supported by the ONU may be preconfigured. The ONU only needs to record a timestamp of the time domain supported by the ONU. In this case, the process in which the ONU parses the PON data frame to obtain the first timestamp includes: The ONU parses the time domain information of the PON data frame. When the time domain indicated by the time domain information belongs to the time domain corresponding to the ONU (namely, the time domain supported by the ONU), it indicates that the first timestamp is a timestamp that the ONU needs to record, and the ONU continues to parse the PON data frame to obtain the time domain indicated by the time domain information and the first timestamp. Correspondingly, subsequent S205 is performed. Optionally, when the time domain indicated by the time domain information does not belong to the time domain corresponding to the ONU, it indicates that the first timestamp is not the timestamp that the ONU needs to record, and the ONU stops parsing the PON data frame. Correspondingly, subsequent S205 is not performed. For example, the ONU supports two time domains: a first time domain and a second time domain. If the time domain indicated by the time domain information in the PON data frame is the first time domain, the time domain indicated by the time domain information belongs to the time domain corresponding to the ONU, and the ONU continues to parse the PON data frame to obtain the first time domain indicated by the time domain information and the first timestamp, and records the first time domain and the first timestamp correspondingly. If the time domain indicated by the time domain information in the PON data frame is a third time domain, the time domain indicated by the time domain information does not belong to the time domain corresponding to the ONU, and the ONU stops parsing the PON data frame.

In this way, when the communication system supports a plurality of time domains, the ONU can effectively distinguish the time domain to which the timestamp carried in a PON data frame belongs, to obtain a timestamp in a time domain corresponding to the ONU. If the time domain corresponding to the ONU is not the time domain indicated by the time domain information, it indicates that the first timestamp carried in the PON data frame is not the timestamp required by the ONU, and the ONU stops parsing the PON data frame, so that unnecessary parsing actions can be reduced, thereby reducing operation overheads.

In a second optional manner, the ONU supports a time domain supported by the OLT, in other words, a time domain supported by the ONU is the same as the time domain supported by the OLT. In this case, the process in which the ONU parses the PON data frame to obtain the first timestamp includes: The ONU parses the PON data frame to obtain the time domain indicated by the time domain information and the first timestamp; and the ONU records the time domain and the first timestamp correspondingly. If the OLT supports a plurality of time domains, the OLT sends, to the ONU, a plurality of PON data frames that carry different time domain information. In this way, the ONU records the plurality of time domains and a plurality of first timestamps in a one-to-one correspondence.

As shown in FIG. 6 and FIG. 7, the time information further includes time type information, and the time type information indicates a meaning of data corresponding to the timestamp carried in the PON data frame. In this case, the ONU may read the time type information to obtain the meaning of the data corresponding to the timestamp carried in the PON data frame.

Refer to S201. Some PON data frames generated by the OLT may also not carry time information. In this case, in an optional example, the OLT generates another PON data frame, and the PON data frame does not include a target field. Correspondingly, after receiving the another PON data frame, the ONU parses the PON data frame. If a structure of the PON data frame is the same as that of a conventional PON data frame, the PON data frame is parsed based on a method for parsing the conventional PON data frame. In another optional example, an overhead area of each PON data frame generated by the OLT includes a target field, and the target field further includes a type identifier. The type identifier indicates a type of information carried in the target field. In this case, the ONU determines, based on the type identifier, the type of the information carried in the target field, and reads the information carried in the target field. In S201, it is assumed that the PON data frame generated by the OLT carries time information. For a structure of the PON data frame received by the ONU, refer to FIG. 8. After determining that the type identifier is the first identifier, the ONU reads the time information from the target field. It should be noted that, if the ONU receives another PON data frame and the type identifier is another identifier, the ONU determines, based on the type identifier, a type of information carried in a target field in the another PON data frame, and reads the information.

Further, as shown in FIG. 10, the target field further includes a check field. After receiving the PON data frame, the ONU may further check, based on the check field, other information other than the check field carried in the target field, and parse the other information after the check succeeds. For example, if the target field carries time information, the ONU checks the time information based on the check field, and parses the time information after the check succeeds. Optionally, if the check of the ONU on the time information based on the check information does not succeed, it indicates that a transmission error may occur in a transmission process of the time information, and the ONU stops parsing the time information. In this way, an unnecessary parsing process caused by a transfer error of the time information can be avoided.

S205: The ONU performs time synchronization based on the first timestamp.

As described above, the time information includes the first timestamp, and the first timestamp indicates a sending moment of data corresponding to a specified location. After obtaining the first timestamp, the ONU may complete time synchronization with the OLT based on the first timestamp. As described in S204, the ONU supports one or more time domains. For each time domain, the ONU may parse a received PON data frame to obtain a first timestamp corresponding to the time domain. S205 is described by using an example in which a first timestamp corresponding to a time domain supported by the ONU is used to perform time synchronization on the time domain. For a time synchronization process of another time domain supported by the ONU, refer to the following time synchronization process. Details are not described in this embodiment of this application.

For example, the time synchronization process may include two processes: a time correction process and a time refreshing process. The two processes are separately described in embodiments of this application.

First, the time correction process means that the ONU determines time T on an OLT side based on a sum of a first timestamp T1 and a transmission time difference T2 (also referred to as a transmission delay). In other words, T=T1+T2. The time T on the OLT side corresponds to a receiving moment T3 of data corresponding to a specified location on an ONU side. The time T on the OLT side is time corrected (also referred as traced) by the ONU.

The ONU may obtain the transmission time difference in a plurality of manners. In a first optional manner, the OLT calculates a transmission time difference between the OLT and each ONU, and sends the transmission time difference to the corresponding ONU by using another PON data frame (where the another PON data frame is different from the PON data frame generated in S201) in advance. For example, the time difference may be carried in an overhead area or a payload area of the another PON data frame. Correspondingly, the ONU obtains the transmission time difference by receiving and parsing the another PON data frame that carries the transmission time difference. In a second optional manner, the ONU calculates a transmission time difference between the ONU and the OLT. The foregoing transmission time difference is positively correlated with a distance between the ONU and the OLT. In other words, a longer distance indicates a larger transmission time difference, and a shorter distance indicates a smaller transmission time difference.

Second, a time synchronization process refers to a time refreshing process on the ONU side.

In a first optional implementation, the ONU records the time T on the OLT side, and refreshes, when the receiving moment T3 of the data corresponding to the specified location on the ONU side reaches, time on the ONU side by using the time T on the OLT side.

In a second optional implementation, the ONU records the time T on the OLT side and the receiving moment T3 of the data corresponding to the specified location on the ONU side. After a refresh condition is reached, a difference T5 between a refresh moment T4 on the ONU side and the receiving moment T3 is determined, and time on the ONU side is refreshed by using a sum of the time T on the OLT side and the difference T5. The refresh moment T4 refers to local time of the ONU when time refreshing is performed. Considering that there may be a processing error inside the ONU side, during time refreshing, weighted processing may be further performed on the foregoing difference T5. In this case, the foregoing process of refreshing time on the ONU side by using a sum of the time T on the OLT side and the difference T5 may be replaced with: refreshing the time on the ONU side by using a sum of the time T on the OLT side and a weighted difference T5w, where the weighted difference T5w=T5×w, and w is a preset weight value. For example, w=0.8 or 0.9.

In a third optional implementation, the ONU determines a time difference T6 between the ONU and the OLT based on the time T on the OLT side and the receiving moment T3 of the data corresponding to the specified location on the ONU side, where T6=T - T3. After a refresh condition is reached, time on the ONU side is refreshed by using a sum of a refresh moment T4 on the ONU side and the time difference T6. Considering that there may be a processing error inside the ONU side and there may be link noise between the OLT and the ONU, during time refreshing, weighted processing may be further performed on the foregoing time difference T6. In this case, the foregoing process of refreshing time on the ONU side by using a sum of a refresh moment T4 on the ONU side and the time difference T6 may be replaced with: refreshing the time on the ONU side by using a sum of the refresh moment T4 on the ONU side and a weighted time difference T6v, where the weighted time difference T6v=T6×v, and v is a preset weight value. For example, v=0.8 or 0.9.

It should be noted that, the ONU may alternatively perform time refreshing on the ONU side in another refreshing manner. This is not limited in this embodiment of this application.

In an optional example, when the ONU supports R time domains and R is a positive integer, the ONU has clock setting modules that are in a one-to-one correspondence with the R time domains, and each clock setting module records local time of the ONU in a time domain. The refreshing the time on the ONU side by using specific time in a time domain is updating the time recorded by the clock setting module to the specific time. For example, the clock setting module is an RTC.

In another optional example, when the ONU supports S time domains and S is a positive integer greater than 1, the ONU has a clock setting module and S-1 difference recording modules, and the clock setting module records local time of the ONU in a first time domain. The S-1 difference recording modules record time deviations between S-1 other time domains and the first time domain. For the first time domain, the refreshing the time on the ONU side by using specific time is updating the time recorded by the clock setting module to using the specific time. For other time domains, the refreshing the time on the ONU side by using specific time is updating time recorded by the difference recording module to a difference between the specific time and the time deviation recorded by the difference recording module. For example, the clock setting module is an RTC, and the difference recording module is a register.

It should be noted that, the foregoing first implementation is described by using an example in which a time synchronization process is performed between the OLT and the ONU. During actual implementation, a plurality of time synchronization processes (for example, a time synchronization process is periodically performed) need to be performed between the OLT and the ONU, to avoid impact of a constantly changing communication environment on a time synchronization effect between the OLT and the ONU; or a plurality of time synchronization processes need to be performed between the OLT and the ONU, to implement time synchronization in different time domains. For a processing process of each PON data frame, refer to S201 to S205.

In conclusion, in this application, the first timestamp is carried in the overhead area of the PON data frame, so that time information is carried at a fixed location of the PON data frame, and complexity of a process of obtaining the time information by the ONU is reduced, thereby reducing operation overheads for parsing the PON data frame.

In a conventional communication method, time information occurs at different locations in payload areas of different PON data frames. Therefore, the ONU needs to perform a complex software processing procedure by using a CPU to parse time information in each PON data frame. As a result, utilization of the CPU is high. In this embodiment of this application, the time information is located at a fixed location of the overhead area. Therefore, the ONU may parse the time information by performing a simple software processing procedure by using a CPU or directly by using hardware processing. Therefore, utilization of the CPU is effectively reduced, thereby effectively reducing operation overheads for parsing the PON data frame.

In addition, the time information is carried in the overhead area of the PON data frame, and that a payload area carries other information is not affected. Therefore, time information may be carried in payload areas of a plurality of PON data frames on a premise that effective transmission of other information is ensured, thereby effectively meeting a time synchronization requirement.

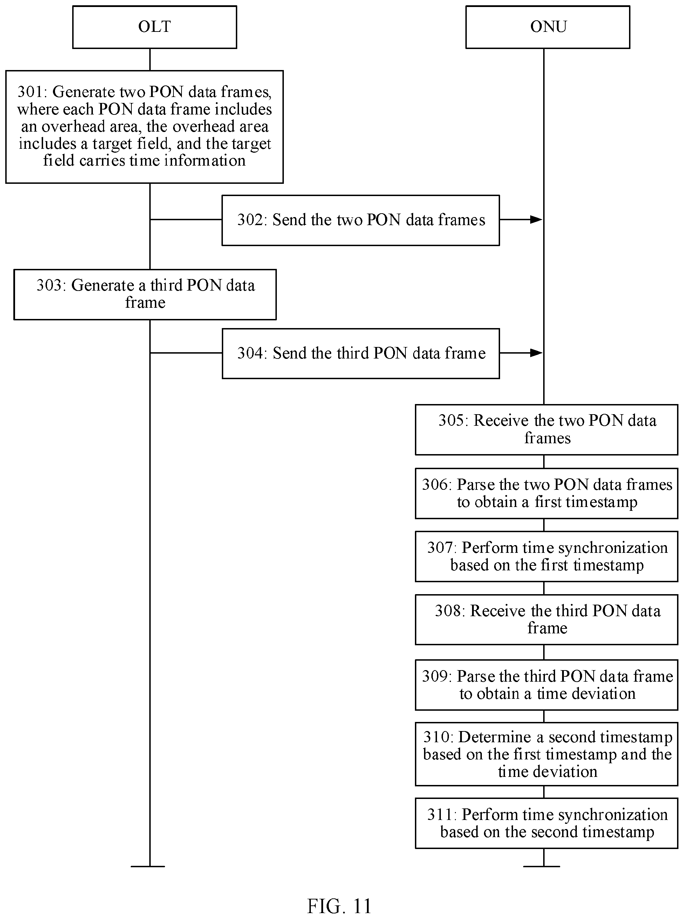

In a second implementation, all content of the first timestamp that indicates a sending moment of data corresponding to a specified location is carried in a plurality of PON data frames. Each PON data frame in the plurality of PON data frames carries a part of the content of the first timestamp. FIG. 11 is a schematic flowchart of another communication method according to an embodiment of this application. The communication method may be applied to the application scenario shown in FIG. 1. As shown in FIG. 11, assuming that, in FIG. 11, all content of a first timestamp is carried in two PON data frames respectively, the method includes the following steps.

S301: An OLT generates two PON data frames, where each PON data frame includes an overhead area, the overhead area includes a target field, and the target field carries time information.

For example, it is assumed that the two PON data frames include a first PON data frame and a second PON data frame. Time information of the first PON data frame includes a first part of the first timestamp. Time information of the second PON data frame includes a second part of the first timestamp. The first timestamp indicates a sending moment of data corresponding to a specified location, and the specified location may be determined by using a preset rule. The preset rule may be agreed on by the OLT and an ONU, or may be carried in a specified PON data frame.

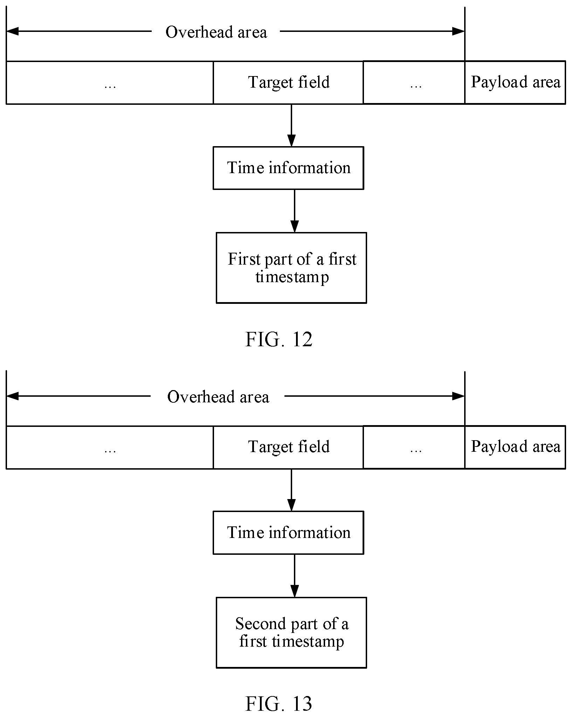

FIG. 12 is a schematic diagram of a structure of a first PON data frame according to an embodiment of this application. FIG. 13 is a schematic diagram of a structure of a second PON data frame according to an embodiment of this application. As shown in FIG. 12 and FIG. 13, each PON data frame in the first PON data frame and the second PON data frame includes an overhead area and a payload area. For a structure thereof, refer to the PON data frame in FIG. 3. A difference lies in that, in FIG. 12, the time information of the first PON data frame includes the first part of the first timestamp; and in FIG. 13, the time information of the second PON data frame includes the second part of the first timestamp.

A time granularity is a unit for dividing time. A finer time granularity indicates a smaller unit for dividing the time. For example, time granularities are arranged in descending order as follows: year, month, day, hour, minute, second, millisecond, microsecond, nanosecond, and the like. For ease of description, the following embodiments are described by using an example in which a time granularity indicated by the first part carried in the first PON data frame is less than a time granularity indicated by the second part carried in the second PON data frame.

Refer to S201. A length of a timestamp may be 96 bits or 80 bits. Time granularities of the timestamp decrease sequentially from left to right. In addition, in the timestamp, a first bit is referred to as a high bit, and a second bit is referred to as a low bit. For example, the second part is content of high bits of the first timestamp, and the first part is content of low bits of the first timestamp. In an optional manner, when a length of the first timestamp is 96 bits, the second part is content of first 48 bits of the first timestamp, namely, content of high 48 bits; and the first part is content of last 48 bits of the first timestamp, namely, content of low 48 bits. In another optional manner, when a length of the first timestamp is 80 bits, the second part is content of first 40 bits of the first timestamp, namely, content of high 40 bits; and the first part is content of last 40 bits of the first timestamp, namely, content of low 40 bits. The foregoing two optional manners are described by using an example in which lengths of the first part and the second part are equal. During actual implementation, the lengths of the first part and the second part may be different, provided that it is ensured that the first part and the second part can form the first timestamp, and a length of any part of the first part and the second part is less than or equal to a length specified by the target field.

In the second implementation, the specified location is a location in the first PON data frame, or may be a location of another PON data frame other than the first PON data frame. In an optional manner, if the specified location is an x^{th} bit in the first PON data frame, the first timestamp indicates a sending moment of data of the x^{th} bit in the first PON data frame, where x is a positive integer, for example, 1. In another optional manner, if the specified location is an x^{th} bit in an m^{th} PON data frame before the first PON data frame or an x^{th} bit in an n^{th} PON data frame after the first PON data frame, the first timestamp indicates a sending moment of data of the x^{th} bit in the m^{th} PON data frame before the first PON data frame or a sending moment of data of the x^{th} bit in the n^{th} PON data frame after the first PON data frame, m, n, and x are positive integers. The foregoing specified location is described by using a location associated with the first PON data frame as an example. During actual implementation, the specified location may alternatively be another location, provided that it is ensured that the ONU can determine the specified location based on the first timestamp and the preset rule. This is not limited in this embodiment of this application.

The first PON data frame and the second PON data frame may be generated in a plurality of manners, provided that it is ensured that overhead areas of the two PON data frames carry the complete first timestamp. In this embodiment of this application, the following implementation is used as an example for description.

A1: The OLT obtains the second part of the first timestamp, and generates the second PON data frame based on the second part of the first timestamp.

Optionally, the generating the second PON data frame based on the second part of the first timestamp refers to adding the second part to a target field of the second PON data frame. For example, it is assumed that, by performing step A1, time indicated by a first timestamp T1 obtained by the OLT is 6:5:5.0001 on January 1, 2021, time indicated by a first part T11 of the first timestamp T1 is 0.0001 second, and time indicated by a second part T12 is 6:5:5 on January 1, 2021. In this case, the time information of the target field of the second PON data frame includes the second part T12 of the first timestamp T 1.

A2: The OLT obtains the first part of the first timestamp, and generates the first PON data frame based on the first part of the first timestamp.

Optionally, the generating the first PON data frame based on the first part of the first timestamp refers to adding the first part to a target field of the first PON data frame. Refer to the example in A1. The time information of the target field of the first PON data frame includes the first part T11 of the first timestamp T1.

S302: The OLT sends the two PON data frames.

Refer to S301. After generating a second PON data frame each time, the OLT sends the second PON data frame; and after generating a first PON data frame each time, the OLT sends the first PON data frame. A sending sequence of the PON data frames is the same as a generation sequence of the PON data frames. A sending frequency of a PON data frame is the same as a generation frequency of the PON data frame. Refer to the communication system shown in FIG. 1. The OLT may separately send the first PON data frame and the second PON data frame to the ONU through the ODN.

Because the time granularity indicated by the second part carried in the second PON data frame is greater than the time granularity indicated by the first part carried in the first PON data frame, the second PON data frame usually needs to be generated and sent first, and then the first PON data frame is generated and sent. In this way, a moment at which an ONU side receives the first PON data frame is close to a moment at which the first timestamp is obtained (in this case, a delay may be generally ignored), thereby reducing complexity of obtaining the first timestamp by the ONU side.

For ease of understanding of a reader, S301 and S302 are described by using an example in which the first timestamp indicates the sending moment of the data of the x^{th} bit in the first PON data frame and the time granularity indicated by the first part is less than the time granularity indicated by the second part. In A2, the OLT directly generates the first PON data frame based on the obtained first part of the first timestamp. For each first PON data frame, a sending time interval between the first PON data frame and a previous second PON data frame adjacent to the first PON data frame is less than a preset time interval, and the preset time interval is usually short, for example, less than 1 second. Therefore, for the previous second PON data frame adjacent to the first PON data frame, a second part of a second timestamp is generally the same as the second part of the first timestamp by default. The second timestamp indicates a sending moment of data of an x^{th} bit in the second PON data frame. In this case, the foregoing step A1 may be replaced with: The OLT generates the second PON data frame based on the obtained second part of the second timestamp. In this way, when the first PON data frame and the second PON data frame are generated, a local timestamp of the OLT may be directly obtained as the first timestamp and the second timestamp, and the first timestamp does not need to be calculated when the second PON data frame is generated, thereby effectively simplifying a generation process of a PON data frame, and improving generation efficiency of the PON data frame. For example, it is assumed that time indicated by a second timestamp T2 obtained by the OLT is 6:5:5.0000 on January 1, 2021, time indicated by a first part T21 of the second timestamp T2 is 0.0000 second, and time indicated by a second part T22 is 6:5:5 on January 1, 2021. By performing step A2, time indicated by a first timestamp T1 obtained by the OLT is 6:5:5.0001 on January 1, 2021, time indicated by a first part T11 of the first timestamp T1 is 0.0001 second, and time indicated by a second part T12 is 6:5:5 on January 1, 2021. In this case, the time information of the target field of the first PON data frame includes the first part T11 of the first timestamp T1, and the time information of the target field of the second PON data frame includes the second part T22 of the second timestamp T2.

In the foregoing implementation, the second part of the second timestamp is the same as the second part of the first timestamp by default. However, during actual implementation, the first PON data frame is generated after the second PON data frame, and there is a case in which the second part of the second timestamp is different from the second part of the first timestamp. In this case, before generating the first PON data frame, after obtaining the first timestamp, the OLT may first detect whether the second part of the first timestamp changes relative to a second part of a historical timestamp, where the historical timestamp is a latest timestamp before the first timestamp. When the second part of the first timestamp changes relative to the second part of the historical timestamp, after a new second PON data frame that carries the second part of the first timestamp is generated and sent (in other words, the new second PON data frame carries the accurate second part of the first timestamp), the first PON data frame is generated and sent. For example, the new second PON data frame may be sent at least twice, to ensure that the ONU side receives the second PON data frame. When the second part of the first timestamp does not change relative to the second part of the historical timestamp, the first PON data frame is generated. In this way, accuracy of the first part and the second part of the first timestamp carried in the first PON data frame and the second PON data frame is ensured.

S303: The OLT generates a third PON data frame.

In this embodiment of this application, the OLT may further generate a PON data frame including time domain information. For example, the third PON data frame generated by the OLT includes an overhead area, and the overhead area includes a target field. The target field carries time information, and the time information includes time domain information. Assuming that the first timestamp carried in the first PON data frame and the second PON data frame belongs to a first time domain, the time domain information in the third PON data frame indicates an identifier of a second time domain and a time deviation between the second time domain and the first time domain. For a definition of the time domain, refer to a definition of the time domain in the communication method provided in the foregoing first implementation. A length of the time domain information may be equal to a length of the first part or the second part. In an example, the length of the time domain information is 48 bits, where 8 bits are for carrying the identifier of the second time domain, and 40 bits are for carrying the time deviation. In another example, the length of the time domain information is 40 bits, where 8 bits are for carrying the identifier of the second time domain, and 32 bits are for carrying the time deviation. By using the third PON data frame, the ONU may determine the time deviation between the second time domain and the first time domain, to determine a corresponding second timestamp in the second time domain based on the first timestamp.

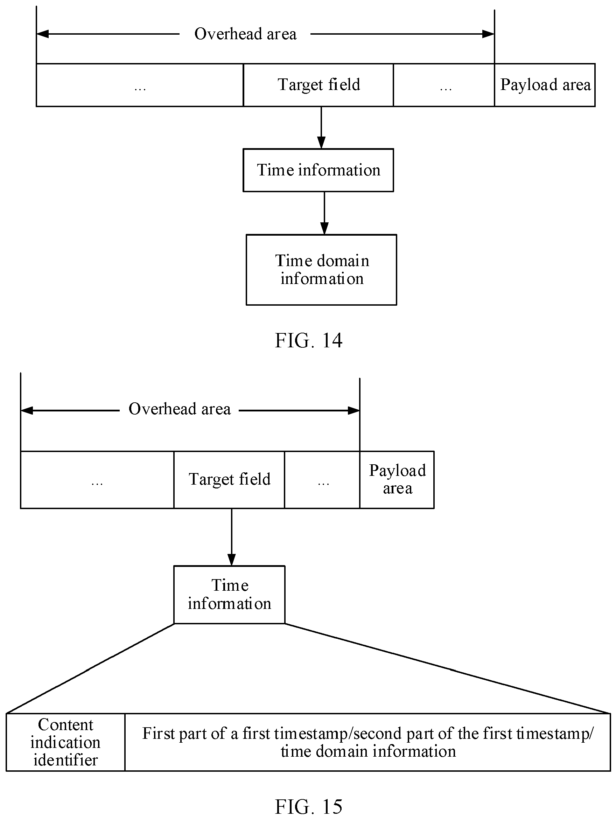

FIG. 14 is a schematic diagram of a structure of a third PON data frame according to an embodiment of this application. As shown in FIG. 14, the third PON data frame includes an overhead area and a payload area. For a structure thereof, refer to the PON data frame in FIG. 3. A difference lies in that, in FIG. 14, time information of the third PON data frame includes time domain information.

During actual implementation, the first PON data frame, the second PON data frame, and the third PON data frame have a same structure, but carry different content in time information. In this way, parsing complexity of the PON data frame can be reduced.

In S301 and S303, lengths of the target fields of the PON data frames generated by the OLT are short, for example, less than 96 bits. In this way, compared with the communication method provided in the foregoing first implementation, transmission overheads for each PON data frame can be reduced to some extent.

Because content of time information carried in target fields of different PON data frames may be different, the time information further includes a content indication identifier, and the content indication identifier indicates a category of the time information. In this way, content mainly carried in the time information is determined based on the content indication identifier. The mainly carried content refers to content other than the content indication identifier. FIG. 15 is a schematic diagram of a structure of an eighth PON data frame according to an embodiment of this application. Time information includes a content indication identifier and main content, and the main content is a first part of a first timestamp, a second part of a first timestamp, or time domain information. In FIG. 15, "/" indicates "or". For example, a length of the content indication identifier is 3 bits, and a length of the main content is 48 bits. When the content indication identifier is a first indication identifier, the main content of the time information is the first part of the first timestamp; when the content indication identifier is a second indication identifier, the main content of the time information is the second part of the first timestamp; and when the content indication identifier is a third indication identifier, the main content of the time information is the time domain information. For example, the first indication identifier is 0b000, the second indication identifier is 0b001, and the third indication identifier is 0b010. In this embodiment of this application, the content indication identifier may further include another identifier. The foregoing three identifiers are merely examples for description. This is not limited in this embodiment of this application.

In an optional manner, a target field of a PON data frame generated by the OLT is a field independently set in an overhead area. For example, refer to FIG. 4. The target field is located between the SFC structure and the PON identifier structure, or the target field may be located after the PON identifier structure. Optionally, the target field further includes a check field. The check field is for checking information other than the check field carried in the target field. For example, the check field carries a check code generated based on the other information. For example, when the target field carries time information, the check field is for checking the time information. For example, the check field is a HEC field. For a manner of generating content of the HEC field, refer to a manner of generating content of the HEC field in the foregoing SFC structure or PON identifier structure. This is not limited in this embodiment of this application.

In a communication system, a transmission frequency of a PON data frame is 8000 times per second, and a current time synchronization requirement is 100 times per second. In other words, when 100 PON data frames are for time synchronization per second, the time synchronization requirement can be met. In this case, if each PON data frame carries the time information by using a target field, an overall transmission frequency of the first PON data frame and the second PON data frame for time synchronization reaches at most 8000 times per second, and a transmission frequency of the first PON data frame and a transmission frequency of the second PON data frame each reaches at most 4000 times per second, which fully meets the time synchronization requirement.

Optionally, because an actual time synchronization requirement is far less than 4000 times per second, some PON data frames generated by the OLT may also not carry time information, to reduce carrying of redundant time information. In an optional example, the OLT generates a fourth PON data frame, and the fourth PON data frame does not include a target field. A structure of the fourth PON data frame may be the same as that of a conventional PON data frame. In this way, compatibility with a conventional communication system can be implemented. In another optional example, an overhead area of each PON data frame generated by the OLT includes a target field, and the overhead area of the PON data frame further includes a type identifier. The type identifier indicates a type of information carried in the target field. Different type identifiers are carried in different PON data frames, so that different information is carried in target fields of different PON data frames. In this way, different information can be carried in a target field at a same location in different PON data frames, so that the target field is reused, functions of the target field are enriched, and a waste of communication resources caused by redundant information carried in the target field is reduced. For content of a type identifier and a type of information carried in a target field indicated by the type identifier, refer to Table 1. It should be noted that, if a target field in a PON data frame carries PON identifier information, an overhead area of the PON data frame may not include a PON identifier structure, in other words, the target field has implemented a function of the PON identifier structure. In this way, carrying of redundant information can be reduced.

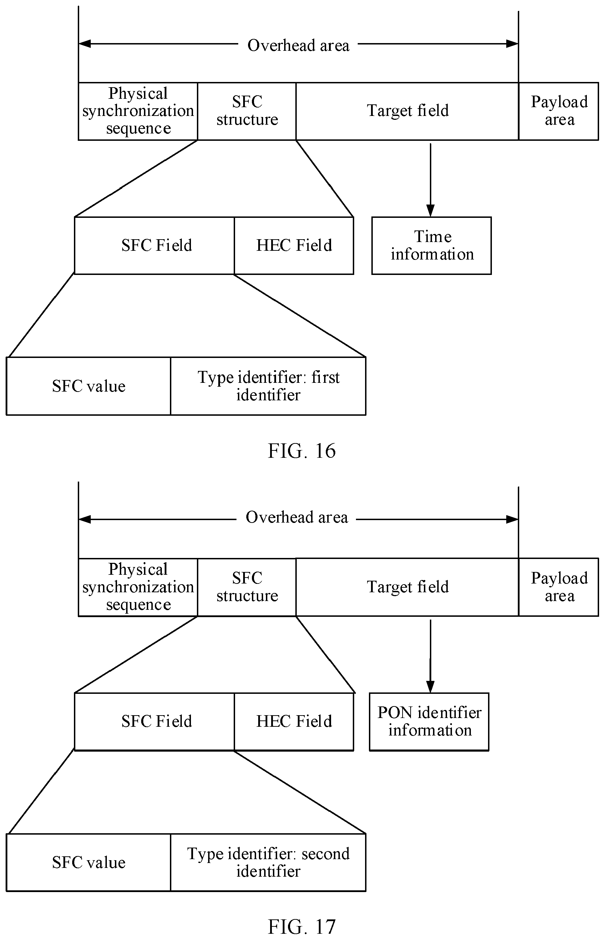

Optionally, the type identifier may be located in an independent field in the PON data frame, or may be carried in another structure of the overhead area. When the type identifier is carried in the another structure of the overhead area, functions of the another structure may be enriched. Refer to S201. The overhead area includes an SFC structure. A length of an SFC field in a conventional SFC structure is 51 bits. In this embodiment of this application, the type identifier is set in the SFC field. If a length of the type identifier is 3 bits, a length of an SFC value identifying a quantity of PON data frames in which the SFC field is located is 48 bits, and remaining 3 bits carry the type identifier. Because a service life of the length of the 48 bits may be: 48 bits/(365*24*60*60*8000)=1115 (years), such a setting does not affect a normal function of the SFC field. FIG. 16 and FIG. 17 are respectively schematic diagrams of structures of two PON data frames in which type identifiers are set in SFC fields. In FIG. 16, a type identifier is a first identifier, and a corresponding target field carries time information. In an optional example, in FIG. 16, an overhead area of the PON data frame may include a PON identifier structure. For example, the PON identifier structure is located after the target field. In another optional example, in FIG. 16, an overhead area of the PON data frame may not include a PON identifier structure. In FIG. 17, a type identifier is a second identifier, and a corresponding target field carries PON identifier information.

In an optional manner, a target field of a PON data frame generated by the OLT is reused with another structure in an overhead area. In this way, functions of the another structure can be enriched, and utilization of the another structure can be improved. For example, the target field is located in a PON identifier structure. As described above, the PON identifier structure carries PON identifier information. The target field may occupy a field occupied by at least a part of the PON identifier information. For example, the target field occupies a field in which the PON identifier and the TOL information are located. A length of the target field is 43 bits. The PON identifier structure carries a type identifier, and the type identifier indicates a type of the information carried in the target field. If the type identifier is a first identifier, the target field carries the time information. If the type identifier is a second identifier, the target field carries non-time information, for example, at least a part of the PON identifier information. It should be noted that, when the target field carries the time information, if a length of the time information is less than the length of the target field, bits other than the time information in the target field may carry other information. For example, the length of the target field is 43 bits, a length of a first part of a first timestamp, a length of a second part of the first timestamp, or a length of time domain information in the time information is 40 bits, and a length of a content indication identifier is 2 bits. In this case, a remaining 1 bit may carry other information.

For example, if the type identifier is the first identifier, the target field occupies the field in which the PON identifier and the TOL information are located. In this case, when the type identifier is the second identifier, the target field carries the PON identifier and the TOL information, in other words, the target field restores a function of a corresponding field in the PON identifier structure. Optionally, if the type identifier is a third identifier, the target field indicates that the OLT in a PON is switched. For example, a first indication identifier is 0b0001, a second indication identifier is 0b0000, and a third indication identifier is 0b0010.

Further, optionally, if the type identifier is a fourth identifier, the target field carries reserved information. If the type identifier is a fifth identifier, the target field carries private definition information.

It should be noted that, if the target field occupies a field occupied by one part of the PON identifier information, the PON identifier structure further carries the other part of content of the PON identifier information. For example, if the target field occupies the field in which the PON identifier and the TOL information are located, the PON identifier structure further includes PON identifier type information, where the PON identifier type information includes: an RE flag, an ODN class, and reserved information. The type identifier may be carried in a field independently set in the PON identifier structure, or may be carried in information existing in the PON identifier structure. For example, the type identifier is carried in the reserved information of the PON identifier type information.

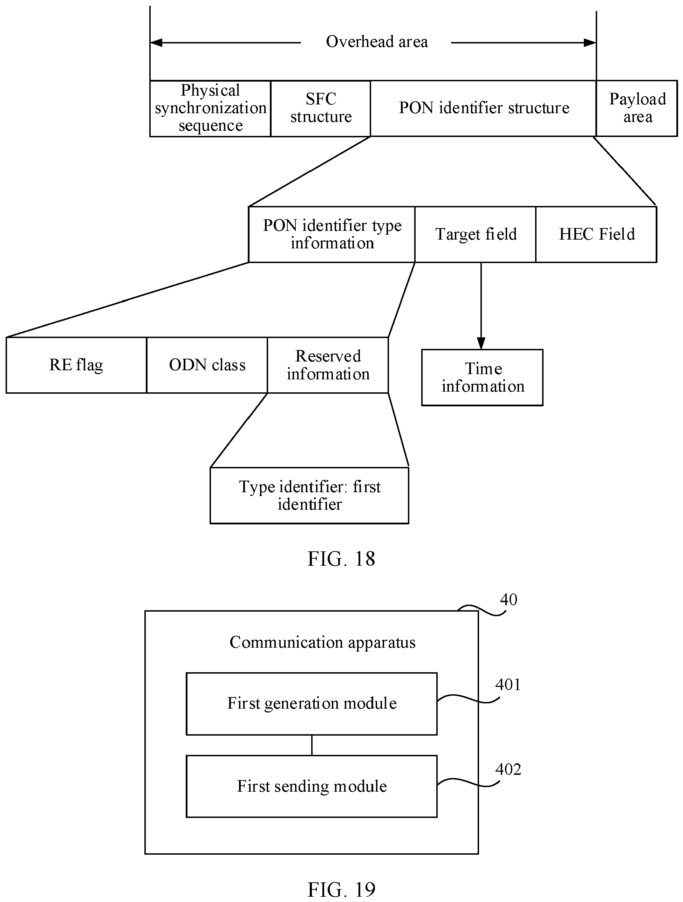

FIG. 18 is a schematic diagram of a structure of a ninth PON data frame according to an embodiment of this application. In FIG. 18, it is assumed that a target field is located in a PON identifier structure, a type identifier is located in reserved information of PON identifier type information, the type identifier is a first identifier, and the corresponding target field carries time information. It should be noted that, when the type identifier is another identifier, the target field may also carry other information. This is not limited in this embodiment of this application.

For content of the time information in FIG. 16 to FIG. 18, refer to content of the time information in FIG. 15. This is not limited in this embodiment of this application.

S304: The OLT sends the third PON data frame.

Refer to the communication system shown in FIG. 1. The OLT may send the third PON data frame to the ONU through the ODN.

S305: The ONU receives the two PON data frames.

An overhead area of each PON data frame includes a target field, and the target field carries time information; and the two PON data frames include a first PON data frame and a second PON data frame, time information of the first PON data frame includes a first part of the first timestamp, and time information of the second PON data frame includes a second part of the first timestamp. A sequence of receiving the first PON data frame and the second PON data frame by the ONU is the same as a sequence of sending the first PON data frame and the second PON data frame by the OLT.

S306: The ONU parses the two PON data frames to obtain the first timestamp.

Refer to S301, FIG. 12, and FIG. 13. Each PON data frame includes an overhead area, and the overhead area includes a part of the first timestamp. Correspondingly, the ONU parses the overhead areas of the two PON data frames to obtain the first timestamp. For example, the ONU may extract the second part of the first timestamp from the overhead area of the second PON data frame, extract the first part of the first timestamp from the overhead area of the first PON data frame, and determine the first timestamp based on the first part and the second part.

Further, as shown in FIG. 15, the time information carried in the target field of the overhead area includes the content indication identifier. In this case, the ONU reads the content indication identifier in the time information from the target field, to determine whether the first part of the first timestamp or the second part of the first timestamp is extracted.

Refer to S303. Some PON data frames generated by the OLT may also not carry time information. In this case, in an optional example, the OLT generates a fourth PON data frame, and the fourth PON data frame does not include a target field. Correspondingly, after receiving the fourth PON data frame, the ONU parses the fourth PON data frame. If a structure of the fourth PON data frame is the same as that of a conventional PON data frame, the fourth PON data frame is parsed based on a method for parsing the conventional PON data frame. In another optional example, an overhead area of each PON data frame generated by the OLT includes a target field, and the target field further includes a type identifier. The type identifier indicates a type of information carried in the target field. In this case, the ONU determines, based on the type identifier, the type of the information carried in the target field, and reads the information carried in the target field. In S301, it is assumed that the PON data frame generated by the OLT carries time information. In this case, the type identifier of the first PON data frame or the second PON data frame received by the ONU may be located in the SFC field as shown in FIG. 16, or may be located in the reserved information of the PON identifier type information as shown in FIG. 18. After determining that the type identifier is the first identifier, the ONU reads the time information from the target field. It should be noted that, if the ONU receives another PON data frame and the type identifier is another identifier (for example, as shown in FIG. 17, the type identifier is the second identifier), the ONU determines, based on the type identifier, a type of information carried in a target field in the another PON data frame, and reads the information.

Further, after receiving the PON data frame, the ONU may further check, based on the check field in the PON data frame, information corresponding to the check field, and parse the corresponding information after the check succeeds. In this way, an unnecessary parsing process caused by a transfer error of the corresponding information can be avoided. For example, if the time information is carried in the target field of the PON identifier structure, the ONU may further check the time information based on the check field in the PON identifier structure, and parse the time information after the check succeeds. For example, the foregoing check field is a HEC field.

Optionally, if the first part and the second part can form the complete first timestamp, the ONU may determine the first timestamp based on the first part and the second part in the following manner: The ONU records, after obtaining the second PON data frame, the second part of the first timestamp carried in the second PON data frame; records, after obtaining the first PON data frame, the first part of the first timestamp carried in the first PON data frame; and splices the first part and the second part to obtain the first timestamp. In an optional example, there may be partial data overlapping between the first part and the second part. In this case, the process of splicing the first part and the second part to obtain the first timestamp may be replaced with: performing deduplication processing on the first part and the second part (in other words, reserving one copy of an overlapping part between the first part and the second part), and splicing the first part and the second part obtained after the deduplication processing to obtain the first timestamp.

During actual implementation, the ONU has a first recording module and a second recording module, where the first recording module is configured to record the first part of the first timestamp of the received first PON data frame, and the second recording module is configured to record the second part of the first timestamp of the received second PON data frame. Both the first recording module and the second recording module may be registers.

Refer to S302. If the OLT performs sending of the PON data frames based on a sequence of first sending the second PON data frame and then sending the first PON data frame, each time after receiving a second PON data frame, the ONU updates a record in the second recording module by using the second part of the first timestamp carried in the second PON data frame; and each time after receiving a first PON data frame, the ONU updates a record in the first recording module by using the first part of the first timestamp carried in the first PON data frame, and splices the record in the first recording module and the record in the second recording module to obtain the first timestamp. In this way, a moment at which the ONU side receives the first PON data frame may be close to a moment at which the first timestamp is obtained, thereby reducing complexity of obtaining the first timestamp by the ONU side.

It should be noted that, a splicing sequence of the first part and the second part is consistent with a splitting sequence of the first part and the second part in S301. For example, when splitting the first timestamp, the OLT uses content of high bits of the first timestamp as the second part, and uses content of low bits of the first timestamp as the first part. When splicing the first part and the second part, the ONU splices the second part at a front end (which may also be referred to as a left side) of the first part in a descending order of bits.

For example, it is assumed that the OLT records, after obtaining the second PON data frame, a second part T12 of the first timestamp carried in the second PON data frame, where time indicated by the T12 is 6:5:5 on January 1, 2021; and records, after obtaining the first PON data frame, a first part T 11 of the first timestamp carried in the first PON data frame, where time indicated by the T11 is 0.0001 second. In this case, the first part and the second part are spliced to obtain a first timestamp T1, where time indicated by the T1 is 6:5:5.0001 on January 1, 2021.

S307: The ONU performs time synchronization based on the first timestamp.

As described in S301, the first timestamp indicates a sending moment of data corresponding to a specified location in the first time domain. After obtaining the first timestamp, the ONU may complete time synchronization with the OLT in the first time domain based on the first timestamp. For the process, refer to the process of S205. Details are not described in this embodiment of this application.

S308: The ONU receives the third PON data frame.

As described in S303, the third PON data frame includes an overhead area, the overhead area includes a target field, the target field carries time information, the time information includes time domain information, and the time domain information indicates an identifier of a second time domain and a time deviation between the second time domain and the first time domain;

S309: The ONU parses the third PON data frame to obtain the time deviation.

Refer to FIG. 13. The target field of the overhead area of the third PON data frame includes the time domain information. Correspondingly, the ONU parses the target field of the overhead area of the third PON data frame to obtain the time domain information. Further, as shown in FIG. 15, the time information carried in the target field of the overhead area includes the content indication identifier. In this case, the ONU reads the content indication identifier in the time information from the target field, to determine that the time domain information is extracted.

Refer to S303. The first timestamp carried in the first PON data frame and the second PON data frame belongs to the first time domain. In this embodiment of this application, the first time domain may be a reference time domain, and a timestamp in another time domain is calculated with reference to the first time domain, in other words, the first time domain is used as a reference. In this case, a time domain supported by the ONU includes at least the first time domain. In this case, in S306, after parsing the two PON data frames to obtain the first timestamp, the ONU may further record the first time domain and the first timestamp correspondingly. The ONU may or may not support another time domain other than the first time domain. In this case, the ONU may perform different actions according to different actual application scenarios. In this embodiment of this application, the following two optional manners are used as examples for description.

In a first optional manner, the ONU supports one or more time domains. A quantity of time domains supported by the ONU is less than or equal to a quantity of time domains supported by the OLT. The time domain supported by the ONU may be preconfigured. The ONU only needs to record a timestamp of the time domain supported by the ONU. In S308, the process in which the ONU parses the third PON data frame to obtain the time deviation includes: The ONU parses the time domain information of the third PON data frame. When a time domain indicated by third time domain information belongs to the time domain corresponding to the ONU (namely, the time domain supported by the ONU), it indicates that the time deviation is a time deviation that the ONU needs to record, and the ONU continues to parse the PON data frame to obtain the time domain indicated by the third time domain information and the time deviation. Correspondingly, subsequent S309 is performed. Optionally, when the time domain indicated by the third time domain information does not belong to the time domain corresponding to the ONU, it indicates that the time deviation is not the time deviation that the ONU needs to record, and the ONU stops parsing the PON data frame. Correspondingly, subsequent S309 is not performed. For example, in addition to the first time domain, the ONU further supports two time domains: the second time domain and a third time domain. If the time domain indicated by the third time domain information in the PON data frame is the second time domain, the time domain indicated by the third time domain information belongs to the time domain corresponding to the ONU, and the ONU continues to parse the PON data frame to obtain the second time domain indicated by the third time domain information and the time deviation, and records the second time domain and the time deviation correspondingly. If the time domain indicated by the third time domain information in the PON data frame is a fourth time domain, the time domain indicated by the third time domain information does not belong to the time domain corresponding to the ONU, and the ONU stops parsing the PON data frame.

In this way, when the communication system supports a plurality of time domains, the ONU can effectively distinguish the time domain to which the time deviation carried in a PON data frame belongs, to obtain a time deviation in a time domain corresponding to the ONU. If the time domain corresponding to the ONU is not the time domain indicated by the time domain information, it indicates that the time deviation carried in the PON data frame is not the time deviation required by the ONU, and the ONU stops parsing the PON data frame, so that unnecessary parsing actions can be reduced, thereby reducing operation overheads.

In a second optional manner, the ONU supports a time domain supported by the OLT, in other words, a time domain supported by the ONU is the same as the time domain supported by the OLT. In this case, the process in which the ONU parses the third PON data frame to obtain the time deviation includes: The ONU parses the third PON data frame to obtain the time domain indicated by the time domain information and the time deviation; and the ONU records the time domain and the time deviation correspondingly. If the OLT supports a plurality of time domains, the OLT sends, to the ONU, a plurality of third PON data frames that carry different time domain information. In this way, the ONU records the plurality of time domains and a plurality of time deviations in a one-to-one correspondence.

S310: The ONU determines the second timestamp based on the first timestamp and the time deviation.

It is assumed that the first timestamp belongs to the first time domain, the time domain corresponding to the time domain information of the third PON data frame is the second time domain, and a timestamp corresponding to the first timestamp in the second time domain is the second timestamp. In this case, the time deviation between the second time domain and the first time domain is equal to a time deviation between the second timestamp and the first timestamp. In this case, the ONU determines a sum of the first timestamp and the obtained time deviation as the second timestamp.

S311: The ONU performs time synchronization based on the second timestamp.

As described in S301, the first timestamp indicates a sending moment of data corresponding to a specified location in the first time domain. In this case, the second timestamp indicates a sending moment of data corresponding to the specified location in the second time domain. After obtaining the second timestamp, the ONU may complete time synchronization with the OLT in the second time domain based on the second timestamp. For the process, refer to the process of S205. For a processing process of the second timestamp in S309, refer to a processing process of the first timestamp in S205. Details are not described in this embodiment of this application.

It should be noted that, if the communication system supports only one time domain, the OLT and the ONU in the communication system correspond to a same time domain. In an implementation, the third PON data frame including the time domain information is generated. However, because the second time domain is the same as the first time domain, the foregoing time deviation in the third PON data frame is 0. In another implementation, the third PON data frame including the time domain information is not generated, in other words, S303, S304, and S308 to S311 are not performed. In this way, communication overheads and parsing complexity of the PON data frame can be reduced. In addition, S303, S304, and S308 to S311 are described by using an example in which the OLT and the ONU transmit a third PON data frame. When a quantity of time domains supported by the OLT and the ONU is greater than 2, the OLT and the ONU need to transmit a plurality of third PON data frames that carry time domain information, to indicate time deviations between different time domains and the first time domain. For a processing process of each third PON data frame, refer to a processing process of the third PON data frame in S303, S304, and S308 to S311. Details are not described in this embodiment of this application.

In addition, FIG. 11 is described by using an example in which all content of the first timestamp is carried by two PON data frames respectively. During actual implementation, all the content of the first timestamp may be carried in three or four PON data frames respectively, provided that it is ensured that the ONU can obtain the first timestamp from the three or four PON data frames. When all the content of the first timestamp is carried in at least three PON data frames respectively, for a structure and a processing manner of a PON data frame that carries a part of a minimum time granularity of the first timestamp, refer to a structure and a processing manner of the foregoing first PON data frame; and for a structure and a processing manner of a PON data frame that carries a part of another time granularity of the first timestamp, refer to a structure and a processing manner of the foregoing second PON data frame. Details are not described in this embodiment of this application.

In conclusion, in this application, a part of the first timestamp is carried in the overhead area of the PON data frame, so that time information is carried at a fixed location of the PON data frame, and complexity of a process of obtaining the time information by the ONU is reduced. In addition, the time information is carried in the overhead area of the PON data frame, and that a payload area carries other information is not affected. Therefore, time information may be carried in payload areas of a plurality of PON data frames on a premise that effective transmission of other information is ensured, thereby effectively meeting a time synchronization requirement.

It should be noted that, the foregoing second implementation is described by using an example in which a time synchronization process is performed between the OLT and the ONU. During actual implementation, a plurality of time synchronization processes (for example, a time synchronization process is periodically performed) need to be performed between the OLT and the ONU, to avoid impact of a constantly changing communication environment on a time synchronization effect between the OLT and the ONU. Therefore, the OLT needs to send a plurality of groups of PON data frames to the ONU. Each group of PON data frames includes a first PON data frame and a second PON data frame that correspond to a same first timestamp. That the first PON data frame and the second PON data frame correspond to a same first timestamp means that the first PON data frame includes a first part of the first timestamp and the second PON data frame includes a second part of the first timestamp. For a processing process of each group of PON data frames, refer to S301, S302, and S305 to S307.

In a first optional example, in the foregoing plurality of groups of PON data frames, the first PON data frame may be in a one-to-one correspondence with the second PON data frame. In this way, rates at which the OLT generates each group of PON data frames may be the same, for example, each group of PON data frames are separately generated at a rate of 100 per second. In a second optional example, when a time granularity indicated by the first part is less than a time granularity indicated by the second part, for different groups of PON data frames, the time granularity of the first part of the timestamp is fine and changes quickly, and the time granularity of the second part of the timestamp is coarse and changes slowly. Therefore, second parts carried in second PON data frames of different groups of PON data frames may be the same. In this way, different groups of PON data frames may share a same second PON data frame. In this case, in the foregoing plurality of groups of PON data frames, a plurality of first PON data frames may correspond to one second PON data frame. In this way, a generation rate of the second PON data frame may be reduced, to reduce transmission of the second PON data frames that carry the same second part, and reduce transmission overheads occupied by redundant information.

In the second optional example, a rate at which the first PON data frame is generated is greater than a rate at which the second PON data frame is generated. For example, the OLT may generate the first PON data frames at a rate of 100 per second, and generate the second PON data frame at a rate of n seconds per. n is a positive integer. For example, n=1 or 5. For another example, after the OLT generates and sends a second PON data frame, before generating the first PON data frame each time, after obtaining the first timestamp, the OLT may first detect whether the second part of the first timestamp changes relative to a second part of a historical first timestamp, where the historical first timestamp is a latest first timestamp (for example, a sending moment of data corresponding to a previous specified location) before the first timestamp. When the second part of the first timestamp changes relative to the second part of the historical first timestamp, after a new second PON data frame that carries the second part of the first timestamp is generated and sent (in other words, the new second PON data frame carries the updated second part of the first timestamp), the first PON data frame is generated and sent. When the second part of the first timestamp does not change relative to the second part of the historical first timestamp, the first PON data frame that carries the first part of the first timestamp is generated and sent.

In the second optional example, optionally, when S302 is performed, when the second part of the first timestamp changes relative to the second part of the historical first timestamp (namely, the latest first timestamp before the first timestamp), the OLT may send a PON data frame that carries the second part of the first timestamp at least twice (for example, thrice), where the PON data frame is a new second PON data frame. The OLT sends the second PON data frame a plurality of times, which can ensure that the second part can be effectively received by the ONU, thereby ensuring that the ONU side can trace a time change at the OLT in time. For example, a target field of the first timestamp carried in the time information of the second PON data frame sent the plurality of times may be the same, and other parts may be different. In this case, sending the second PON data frame the plurality of times is equivalent to retransmitting the second part of the first timestamp.

It should be noted that, the foregoing retransmission process of the second PON data frame is usually performed continuously, and sending of the first PON data frame is prohibited in the retransmission process. When a quantity of retransmitted second PON data frames reaches a preset quantity, the retransmission process is stopped, and then the first PON data frame is sent again. In this way, when the second part of the first timestamp changes, an error in obtaining the timestamp by combining the first part of the first timestamp and the second part of the historical first timestamp caused when the ONU does not update the second part of the first timestamp in time may be avoided.

For example, the OLT generates and sends the first PON data frames at the rate of 100 per second, and generates and sends the second PON data frame at a rate of 1 per second. It is assumed that time indicated by a second part T12 of the currently obtained first timestamp is 6:5:5 on January 1, 2021, and time indicated by a second part T13 of the historical first timestamp is 6:5:4 on January 1, 2021. In this case, the second part T12 of the first timestamp changes relative to the second part T13 of the historical first timestamp. After sending the second PON data frame that carries the T12 at least twice, the OLT continues to generate and send the first PON data frames and the second PON data frame based on an original speed.

In the communication methods provided in the foregoing two implementations, an example in which the first timestamp indicates a sending moment of data corresponding to a specified location is used for description. During actual implementation, the first timestamp may further indicate a generation moment of data corresponding to a specified location. For a definition of the specified location, refer to the foregoing embodiments. For example, it is assumed that the first timestamp is a PON data frame that carries the first timestamp in the first implementation, or the first timestamp is a PON data frame that carries the first part of a smaller time granularity in the second implementation. In this case, the first timestamp indicates a generation moment of data of an x^{th} bit in the first PON data frame, where x is a positive integer, for example, 1. In another optional manner, the first timestamp indicates a generation moment of data of an x^{th} bit in an m^{th} PON data frame before the first PON data frame or a generation moment of data of an x^{th} bit in an n^{th} PON data frame after the first PON data frame. Correspondingly, different from the foregoing embodiments, when the ONU side performs a time correction process of time synchronization, for the time domain in which the first timestamp is located, time T on the OLT side is equal to a sum of the first timestamp, a transmission time difference, and an OLT internal delay. The OLT internal delay is a difference between the sending moment of the data corresponding to the specified location and the generation moment of the data corresponding to the specified location.

The foregoing embodiments are described by using an example in which the PON data frame is a downlink frame sent by the OLT to the ONU. In this application scenario, the first timestamp is for time synchronization between the ONU and the OLT. In this embodiment of this application, the PON data frame may alternatively be an uplink frame sent by the ONU to the OLT. In this application scenario, the first timestamp is for reverse time synchronization between the ONU and the OLT, or the first timestamp is for time monitoring performed by the OLT on the ONU. In this application scenario, actions performed by the ONU and the OLT are exchanged with actions performed by the ONU and the OLT in the foregoing embodiments. For example, when the PON data frame is the uplink frame, the overhead area of the PON data frame includes a preamble and a frame definition field. The frame definition field defines a start location of the PON data frame. The target field may be located after the frame definition field, or may be located at another location in the overhead area.

It should be noted that, a sequence of the steps of the communication method in embodiments of this application may be appropriately adjusted, and the steps may also be correspondingly added or deleted depending on a situation. All variant methods readily figured out by a person skilled in the art within the technical scope disclosed in this application shall fall within the protection scope of this application, and therefore are not described.

FIG. 19 is a schematic diagram of a structure of a communication apparatus according to an embodiment of this application. An apparatus 40 includes:
a first generation module 401, configured to generate a passive optical network PON data frame, where the PON data frame includes an overhead area, the overhead area includes at least a part of a first timestamp, and the first timestamp is for time synchronization; and a first sending module402, configured to send the PON data frame.

In a first implementation, a PON data frame carries all content of the first timestamp. The overhead area includes a target field, the target field carries time information, and the time information includes the first timestamp.

Optionally, the time information further includes time domain information, and the time domain information indicates a time domain to which the first timestamp belongs.

Optionally, the time information further includes time type information, and the time type information indicates a meaning of data corresponding to the timestamp carried in the PON data frame.

For example, the target field further includes a type identifier, and the type identifier indicates a type of the information carried in the target field; and if the type identifier is a first identifier, the target field carries the time information; or if the type identifier is a second identifier, the target field carries non-time information, for example, PON identifier information.

In a second implementation, all content of the first timestamp is carried in a plurality of PON data frames. For example, the first generation module 401 is configured to generate two PON data frames, where an overhead area of each PON data frame includes a target field, and the target field carries time information; and the two PON data frames include a first PON data frame and a second PON data frame, time information of the first PON data frame includes a first part of the first timestamp, and time information of the second PON data frame includes a second part of the first timestamp.

Optionally, a time granularity indicated by the first part is less than a time granularity indicated by the second part; and the sending module 402 is configured to: send, when the second part of the first timestamp changes relative to a second part of a historical first timestamp, a PON data frame that carries the second part of the first timestamp at least twice.

In an optional example, the first timestamp belongs to a first time domain, and the apparatus 40 further includes: a second generation module, configured to generate a third PON data frame, where the third PON data frame includes an overhead area, the overhead area includes a target field, the target field carries time information, the time information includes time domain information, the time domain information indicates an identifier of a second time domain and a time deviation between the second time domain and the first time domain; and a second sending module, configured to send the third PON data frame.

Optionally, the time information further includes a content indication identifier, and the content indication identifier indicates a category of the time information.

In an optional example, the overhead area includes a superframe counter SFC field, the SFC field includes a type identifier, and the type identifier indicates a type of information carried in the target field; and if the type identifier is a first identifier, the target field carries the time information; or if the type identifier is a second identifier, the target field carries non-time information, for example, PON identifier information.

In another optional example, the target field is located in a PON identifier structure, the PON identifier structure carries a type identifier, and the type identifier indicates a type of information carried in the target field; and if the type identifier is a first identifier, the target field carries the time information; or if the type identifier is a second identifier, the target field carries non-time information, for example, at least a part of PON identifier information.

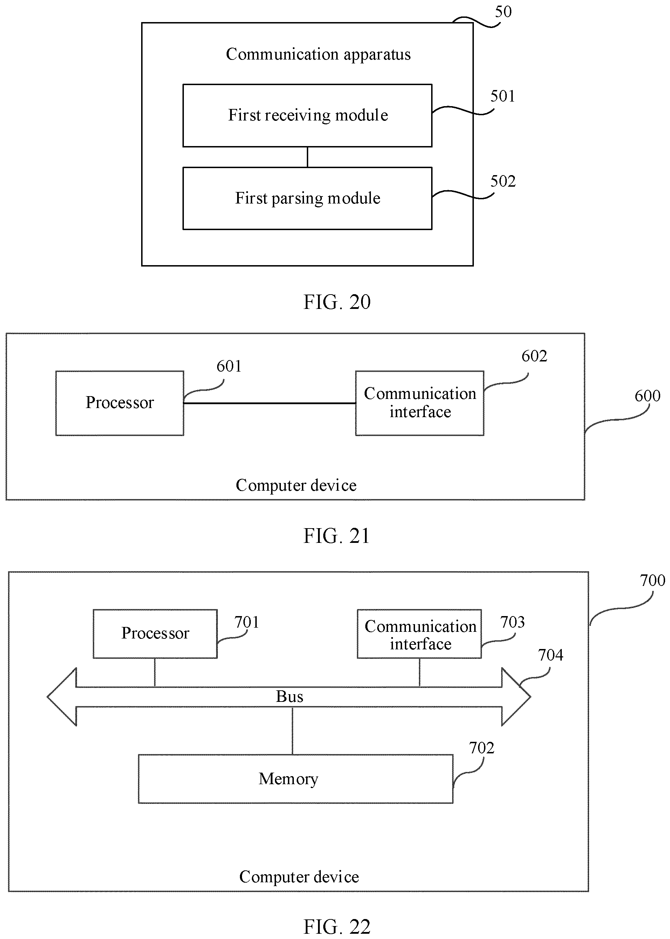

FIG. 20 is a schematic diagram of a structure of a communication apparatus according to an embodiment of this application. An apparatus 50 includes:
a first receiving module 501, configured to receive a passive optical network PON data frame, where the PON data frame includes an overhead area, the overhead area includes at least a part of a first timestamp, and the first timestamp is for time synchronization; and a first parsing module 502, configured to parse the PON data frame to obtain the first timestamp.

In a first implementation, a PON data frame carries all content of the timestamp. The overhead area includes a target field, the target field carries time information, and the time information includes the first timestamp; and the first parsing module 502 is configured to read the time information from the target field, to obtain the first timestamp.

Optionally, the time information further includes time domain information, and the time domain information indicates a time domain to which the first timestamp belongs; and the first parsing module 502 is configured to parse, when a time domain corresponding to an optical network unit ONU is the time domain indicated by the time domain information, the PON data frame to obtain the first timestamp.

Optionally, the time information further includes time type information, and the time type information indicates a meaning of data corresponding to the timestamp carried in the PON data frame.

In an optional example, the target field further includes a type identifier, and the type identifier indicates a type of the information carried in the target field; and if the type identifier is a first identifier, the target field carries the time information; or if the type identifier is a second identifier, the target field carries non-time information, for example, PON identifier information.

In a second implementation, all content of the first timestamp that indicates a sending moment of data corresponding to a specified location is carried in a plurality of PON data frames. The first receiving module 501 is configured to receive two PON data frames, where an overhead area of each PON data frame includes a target field, and the target field carries time information; and the two PON data frames include a first PON data frame and a second PON data frame, time information of the first PON data frame includes a first part of the first timestamp, and time information of the second PON data frame includes a second part of the first timestamp; and the parsing module is configured to determine the first timestamp based on the first part and the second part.

Optionally, the first timestamp belongs to a first time domain, and the apparatus further includes: a second receiving module, configured to receive a third PON data frame, where the third PON data frame includes an overhead area, the overhead area includes a target field, the target field carries time information, the time information includes time domain information, and the time domain information indicates an identifier of a second time domain and a time deviation between the second time domain and the first time domain; a second parsing module, configured to parse the third PON data frame to obtain the time deviation; and a determining module, configured to determine a second timestamp based on the first timestamp and the time deviation.

Optionally, the time information further includes a content indication identifier, and the content indication identifier indicates a category of the time information.

In an example, the overhead area includes a superframe counter SFC field, the SFC field includes a type identifier, and the type identifier indicates a type of information carried in the target field; and if the type identifier is a first identifier, the target field carries the time information; or if the type identifier is a second identifier, the target field carries non-time information, for example, PON identifier information.

In another example, the target field is located in a PON identifier structure, the PON identifier structure carries a type identifier, and the type identifier indicates a type of information carried in the target field; and if the type identifier is a first identifier, the target field carries the time information; or if the type identifier is a second identifier, the target field carries other information, for example, at least a part of PON identifier information.

FIG. 21 shows a possible basic hardware architecture of a computer device 600 according to an embodiment of this application. The computer device 600 includes a processor 601 and a communication interface 602. The processor 601 is configured to perform the communication methods provided in the foregoing embodiments of this application. For example, the processor performs one or more steps of S201 to S202; or the processor performs one or more steps of S203 to S205; or the processor performs one or more steps of S301 to S304; or the processor performs one or more steps of S305 to S311. The communication interface 602 is configured to communicate with another device, for example, receive a PON data frame sent by the another device or send a PON data frame to the another device.

Optionally, FIG. 22 shows another possible basic hardware architecture of a computer device according to an embodiment of this application. Refer to FIG. 22. A computer device 700 includes a processor 701, a memory 702, a communication interface 703, and a bus 704.

In the computer device 700, there may be one or more processors 701. FIG. 22 shows only one of the processors 701. Optionally, the processor 701 may be a CPU. If the computer device 700 includes a plurality of processors 701, the plurality of processors 701 may be of a same type or different types. Optionally, the plurality of processors 701 of the computer device 700 may be further integrated as a multi-core processor.

The memory 702 stores computer instructions and data. The memory 702 may store computer instructions and data that are required for implementing the communication method provided in this application. For example, the memory 702 stores instructions for implementing the steps of the communication method. The memory 702 may be any one or any combination of the following storage media: a nonvolatile memory (for example, a read-only memory (ROM), a solid-state drive (SSD), a hard disk drive (HDD), or an optical disc), and a volatile memory.

The communication interface 703 may be any one or any combination of components having a network access function such as a network interface (for example, an Ethernet interface) and a wireless network interface card.

The communication interface 703 is configured to perform data communication between the computer device 700 and another computer device or terminal.

The bus 704 may connect the processor 701 to the memory 702 and the communication interface 703. In this way, the processor 701 may access the memory 702 through the bus 704, and may further exchange data with the another computer device or terminal through the communication interface 703.

In an example embodiment, this application further provides a non-transitory computer-readable storage medium including instructions, for example, a memory including instructions. The instructions may be executed by a processor of a server to complete the communication method shown in embodiments of this application. For example, the non-transitory computer-readable storage medium may be a ROM, a random access memory (RAM), a CD-ROM, a magnetic tape, a floppy disk, or an optical data storage device.

An embodiment of this application further provides a communication system. The communication system includes an OLT and an ONU. The OLT may include the foregoing communication apparatus 40, and the ONU may include the foregoing communication apparatus 50. For a structure of the communication system, refer to FIG. 1. Optionally, the OLT and the ONU may also include the computer device 600 or 700 provided in the foregoing embodiments.

It may be clearly understood by a person skilled in the art that, for the purpose of convenient and brief description, for a detailed working process of the foregoing system, apparatus, and module, refer to a corresponding process in the foregoing method embodiments, and details are not described herein again.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the terms "first", "second", and "third" are merely used for description, but cannot be understood as an indication or implication of relative importance. The term "at least one" means one or more, and the term "a plurality of" means two or more, unless otherwise expressly limited. A refers to B, which means that A is the same as B or A is a simple variant of B.

It should be noted that, when the communication system provided in the foregoing embodiment performs the communication method, only divisions of the foregoing functional modules are described by using an example. During practical application, the foregoing functions may be allocated to and completed by different functional modules according to the requirements, that is, the internal structure of the device is divided into different functional modules, to complete all or part of the functions described above. In addition, the communication method provided in the foregoing embodiments belongs to the same concept as the communication apparatus. For a specific implementation process of the communication apparatus, refer to the method embodiments, and details are not described herein again.

The foregoing descriptions are merely optional embodiments of this application, but are not intended to limit this application. Any modification, equivalent replacement, or improvement made within the principle of this application shall fall within the protection scope of this application.

## Claims

1. A communication method, wherein the method comprises:
generating a passive optical network PON data frame, wherein the PON data frame comprises an overhead area, the overhead area comprises at least a part of a first timestamp, and the first timestamp is for time synchronization; and
sending the PON data frame.

2. The method according to claim 1, wherein the overhead area comprises a target field, the target field carries time information, and the time information comprises the first timestamp.

3. The method according to claim 2, wherein the time information further comprises time domain information, and the time domain information indicates a time domain to which the first timestamp belongs.

4. The method according to claim 2 or 3, wherein the time information further comprises time type information, and the time type information indicates a meaning of data corresponding to the timestamp carried in the PON data frame.

5. The method according to any one of claims 2 to 4, wherein the target field further comprises a type identifier, and the type identifier indicates a type of information carried in the target field; and if the type identifier is a first identifier, the target field carries the time information; or
if the type identifier is a second identifier, the target field carries non-time information.

6. The method according to claim 1, wherein the generating a passive optical network PON data frame comprises:
generating two PON data frames, wherein an overhead area of each PON data frame comprises a target field, and the target field carries time information; and the two PON data frames comprise a first PON data frame and a second PON data frame, time information of the first PON data frame comprises a first part of the first timestamp, and time information of the second PON data frame comprises a second part of the first timestamp.

7. The method according to claim 6, wherein a time granularity indicated by the first part is less than a time granularity indicated by the second part; and
the sending the PON data frame comprises:
sending, when the second part of the first timestamp changes relative to a second part of a historical first timestamp, a PON data frame that carries the second part of the first timestamp at least twice.

8. The method according to claim 6 or 7, wherein the first timestamp belongs to a first time domain, and the method further comprises:
generating a third PON data frame, wherein the third PON data frame comprises an overhead area, the overhead area comprises a target field, the target field carries time information, the time information comprises time domain information, and the time domain information indicates an identifier of a second time domain and a time deviation between the second time domain and the first time domain; and
sending the third PON data frame.

9. The method according to any one of claims 6 to 8, wherein the time information further comprises a content indication identifier, and the content indication identifier indicates a category of the time information.

10. The method according to any one of claims 6 to 9, wherein the overhead area comprises a superframe counter SFC field, the SFC field comprises a type identifier, and the type identifier indicates a type of information carried in the target field; and if the type identifier is a first identifier, the target field carries the time information; or
if the type identifier is a second identifier, the target field carries non-time information.

11. The method according to any one of claims 6 to 10, wherein the target field is located in a PON identifier structure, the PON identifier structure carries a type identifier, and the type identifier indicates a type of information carried in the target field; and if the type identifier is a first identifier, the target field carries the time information; or
if the type identifier is a second identifier, the target field carries non-time information.

12. The method according to any one of claims 6 to 11, wherein the first timestamp is for time synchronization between an optical network unit ONU and an optical line terminal OLT.

13. A communication method, wherein the method comprises:
receiving a passive optical network PON data frame, wherein the PON data frame comprises an overhead area, the overhead area comprises at least a part of a first timestamp, and the first timestamp is for time synchronization; and
parsing the PON data frame to obtain the first timestamp.

14. The method according to claim 13, wherein the overhead area comprises a target field, the target field carries time information, and the time information comprises the first timestamp; and
the parsing the PON data frame to obtain the first timestamp comprises:
reading the time information from the target field, to obtain the first timestamp.

15. The method according to claim 14, wherein the time information further comprises time domain information, and the time domain information indicates a time domain to which the first timestamp belongs; and
the parsing the PON data frame to obtain the first timestamp comprises:
parsing the PON data frame to obtain the time domain indicated by the time domain information and the first timestamp.

16. The method according to claim 14 or 15, wherein the time information further comprises time type information, and the time type information indicates a meaning of data corresponding to the timestamp carried in the PON data frame.

17. The method according to any one of claims 14 to 16, wherein the target field further comprises a type identifier, and the type identifier indicates a type of information carried in the target field; and if the type identifier is a first identifier, the target field carries the time information; or
if the type identifier is a second identifier, the target field carries non-time information.

18. The method according to claim 13, wherein the receiving a passive optical network PON data frame comprises:
receiving two PON data frames, wherein an overhead area of each PON data frame comprises a target field, and the target field carries time information; and the two PON data frames comprise a first PON data frame and a second PON data frame, time information of the first PON data frame comprises a first part of the first timestamp, and time information of the second PON data frame comprises a second part of the first timestamp; and
the parsing the PON data frame to obtain the first timestamp comprises:
determining the first timestamp based on the first part and the second part.

19. The method according to claim 18, wherein the first timestamp belongs to a first time domain, and the method further comprises:
receiving a third PON data frame, wherein the third PON data frame comprises an overhead area, the overhead area comprises a target field, the target field carries time information, the time information comprises time domain information, and the time domain information indicates an identifier of a second time domain and a time deviation between the second time domain and the first time domain;
parsing the third PON data frame to obtain the time deviation; and
determining a second timestamp based on the first timestamp and the time deviation.

20. The method according to claim 18 or 19, wherein the time information further comprises a content indication identifier, and the content indication identifier indicates a category of the time information.

21. The method according to any one of claims 18 to 20, wherein the overhead area comprises a superframe counter SFC field, the SFC field comprises a type identifier, and the type identifier indicates a type of information carried in the target field; and if the type identifier is a first identifier, the target field carries the time information; or
if the type identifier is a second identifier, the target field carries non-time information.

22. The method according to any one of claims 18 to 21, wherein the target field is located in a PON identifier structure, the PON identifier structure carries a type identifier, and the type identifier indicates a type of information carried in the target field; and if the type identifier is a first identifier, the target field carries the time information; or
if the type identifier is a second identifier, the target field carries non-time information.

23. The method according to any one of claims 13 to 22, wherein the first timestamp is for time synchronization between an ONU and an OLT.

24. A computer device, wherein the computer device comprises a processor and a communication interface, wherein
the communication interface is configured to communicate with another device; and
the processor is configured to perform the method according to any one of claims 1 to 12, or perform the method according to any one of claims 13 to 23.
